(19) Europäisches Patentamt
European Patent Office
Office européen des brevets

(11) **EP 4 672 095 A1**

(12) **EUROPEAN PATENT APPLICATION**

(43) Date of publication:
**31.12.2025 Bulletin 2026/01**

(21) Application number: **25185384.2**

(22) Date of filing: **26.06.2025**

(51) International Patent Classification (IPC):
**G06N 10/20** (2022.01)   **G06N 5/01** (2023.01)
**G06N 10/70** (2022.01)   G06N 10/40 (2022.01)

(52) Cooperative Patent Classification (CPC):
**G06N 10/20; G06N 5/01; G06N 10/70;** G06N 10/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.06.2024   US 202463664604 P
22.05.2025   US 202563810602 P**

(71) Applicant: **IonQ, Inc.
College Park, MD 20740 (US)**

(72) Inventors:
• **DELFOSSE, Nicolas Guillaume
College Park, MD 20740 (US)**
• **THAM, Edwin
College Park, MD 20740 (US)**
• **BRODUTCH, Aharon
College Park, MD 20740 (US)**
• **BAIMETOV, Gregory
College Park, MD 20740 (US)**

(74) Representative: **Forresters IP LLP
Skygarden
Erika-Mann-Straße 11
80636 München (DE)**

(54) **LOW-COST NOISE REDUCTION IN CLIFFORD CIRCUITS**

(57)   A method of implementing an n-qubit Clifford unitary on a quantum processor comprising a first block of $n$ qubits, a second block of $n$ qubits, a third block of $n$ qubits, and an ancilla qubit includes preparing n Bell states each on a pair of a qubit in the second block and a qubit in the third block, applying an n-qubit Clifford circuit that corresponds to the n-qubit Clifford unitary, to the third block, measuring one or more stabilizers supported on the second block and the third block, applying controlled-NOT gates each on a pair of a qubit in the first block and a qubit in the second block, applying a Hada- mard gate on each qubit in the first block, measuring the first block and the second block, and applying an n-qubit Pauli operator to the third block based on the measurement of the first block and the second block.

FIG. 1

**Description**

**CROSS REFERENCE TO RELATED APPLICATIONS**

This application claims priority to United States Provisional Applications Serial No. 63/664,604, filed June 26, 2024, and Serial No. 63/810,602, filed May 22, 2025, each of which is herein incorporated by reference in its entirety.

**BACKGROUND**

**Field**

The present disclosure generally relates to a method of implementing Clifford circuits in quantum computers, and more specifically, to a method of reducing logical error rate of Clifford circuits with lower overhead than error correction and without sampling cost of error mitigation.

**Description of the Related Art**

Quantum error correction and quantum error mitigation are the most popular techniques to deal with errors affecting quantum computers.

Fault-tolerant quantum computing relies on quantum error correction to achieve a vanishing logical error rate at constant physical error rate (if it is below some threshold value). This approach is scalable as it comes with a polynomial asymptotic overhead in term of qubit count and gate count, but the qubit cost remain high in practice. For example, the smallest surface code capable of correcting single-qubit errors consumes 17 physical qubits per logical qubit, and the factorization of RSA-2,048 may require surface codes using 1,457 physical qubits per logical qubit. Quantum low-density parity-check (LDPC) codes offer a larger encoding rate. Moreover, it has been proven that quantum LDPC codes achieve a constant asymptotic overhead for fault-tolerant quantum computing. Unfortunately, current estimates for this constant are large. Recent simulations of quantum LDPC codes outperforming surface codes consume respectively 49 and 24 physical qubits per logical qubit. Moreover, these numbers are optimistic as they do not include the cost of a universal set of logical operations. Concatenated codes also show encouraging reduction of the qubit count in the large-scale regime.

Over the past few years, several building blocks of a fault-tolerant quantum computing architecture have been demonstrated experimentally, such as the Bacon-Shor code, the Steane code, the five qubit code, the surface code, logical IQP circuits, fault-tolerant logical teleportation or a logical quantum Fourier transform. These experiments provide critical insights into the long-term goal of building a large-scale fault-tolerant quantum computer. However, for current machines with limited number of qubits, it may be preferable to use more qubit-efficient techniques like quantum error mitigation.

Quantum error mitigation includes a variety of techniques such as zero noise extrapolation or probabilistic error cancellation, allowing to reduce the impact of noise in a quantum circuit by running the circuit many times and post-processing the output data. It is already practically relevant for today's machines as it consumes few or no extra qubit. However, it is not a viable solution for large quantum circuits because the sampling cost grows exponentially with the size of the circuit to implement.

Therefore, there is a need for a noise reduction scheme that uses fewer qubits than quantum error correction and that has a small sampling overhead.

**SUMMARY**

Embodiments of the present disclosure provide a method of implementing an n-qubit Clifford unitary on a quantum processor comprising a first block of n qubits, a second block of $n$ qubits, a third block of $n$ qubits, and an ancilla qubit. The method includes preparing, by a system controller, n Bell states each on a pair of a qubit in the second block and a qubit in the third block, applying, by the system controller, an n-qubit Clifford circuit that corresponds to the n-qubit Clifford unitary, to the third block, measuring, by the system controller, one or more stabilizers supported on the second block and the third block, applying, by the system controller, controlled-NOT gates each on a pair of a qubit in the first block and a qubit in the second block, applying, by the system controller, a Hadamard gate on each qubit in the first block, measuring, by the system controller, the first block and the second block, and applying, by the system controller, an n-qubit Pauli operator to the third block based on the measurement of the first block and the second block.

Embodiments of the present disclosure also provide a method of implementing a controlled-Pauli CZ gate on a quantum processor comprising a first block of $n$ qubits, a second block of $n$ qubits, and an ancilla. The method includes preparing, by a system controller, each qubit in the second block in a superposition state $|+\rangle = |0\rangle + |1\rangle$, applying, by the system controller, a CZ circuit that corresponds to the controlled-Pauli CZ gate, to the second block, measuring, by the system controller, one or more stabilizers supported on the second block, applying, by the system controller, controlled-NOT gates each on a pair of a qubit in the first block and a qubit in the second block, applying, by the system controller, a Hadamard gate on each qubit in the first block, measuring, by the system controller, the first block, and applying, by the system controller, a Pauli operator to the second block based on the measurement of the first block.

Embodiments of the present disclosure further provide a method of implementing an *n*-qubit Clifford circuit on a quantum processor comprising a first block of *n* qubits, a second block of *n* qubits, a third block of *n* qubits, a fourth block of *n* qubits, a fifth block of *n* qubits, and ancilla qubits. The method includes decomposing, by a classical computer, the *n*-qubit Clifford circuit into *n*-qubit sub-circuits, preparing, by a system controller, *n* Bell states each on a pair of a qubit in the second block and a qubit in the third block, applying, by the system controller, one of the *n*-qubit sub-circuits to the third block, measuring, by the system controller, one or more stabilizers supported on the second block and the third block, applying, by the system controller, controlled-NOT gates each on a pair of a qubit in the first block and a qubit in the second block, applying, by the system controller, a Hadamard gate on each qubit in the first block, measuring, by the system controller, the first block and the second block, applying, by the system controller, an *n*-qubit Pauli operator to the third block based on the measurement of the first block and the second block, preparing, by the system controller, *n* Bell states each on a pair of a qubit in the fourth block and a qubit in the fifth block, applying, by the system controller, another one of the *n*-qubit sub-circuits to the fifth block, measuring, by the system controller, one or more stabilizers supported on the fourth block and the fifth block, applying, by the system controller, controlled-NOT gates each on a pair of a qubit in the third block and a qubit in the fourth block, applying, by the system controller, a Hadamard gate on each qubit in the third block, measuring, by the system controller, the third block and the fourth block, and applying, by the system controller, the n-qubit Pauli operator to the fifth block based on the measurement of the third block and the fourth block.

According to an aspect there is provided a method of implementing an n-qubit Clifford unitary on a quantum processor comprising a first block of n qubits, a second block of n qubits, a third block of n qubits, and an ancilla qubit, the method comprising:

preparing, by a system controller, n Bell states each on a pair of a qubit in the second block and a qubit in the third block;

applying, by the system controller, an n-qubit Clifford circuit that corresponds to the n-qubit Clifford unitary, to the third block;

measuring, by the system controller, one or more stabilizers supported on the second block and the third block;

applying, by the system controller, controlled-NOT gates each on a pair of a qubit in the first block and a qubit in the second block;

applying, by the system controller, a Hadamard gate on each qubit in the first block;

measuring, by the system controller, the first block and the second block; and

applying, by the system controller, an n-qubit Pauli operator to the third block based on the measurement of the first block and the second block.

The method may include returning to the preparing of n Bell states, if a fault is detected by the measuring of the one or more stabilizers.

The n-qubit Pauli operator may comprise a sequence of controlled-Pauli operations.

The one or more stabilizers may be measured using an ancilla qubit and a sequence of controlled-Pauli operations.

The method may further include:

decomposing, by a classical computer, the n-qubit Clifford circuit into sub-circuits; and

implementing each of the sub-circuits by gate teleportation.

Each qubit may comprise a physical qubit.

Each qubit may comprise a logical qubit.

According to a further aspect there is provided a method of implementing a controlled-Pauli CZ gate on a quantum processor comprising a first block of n qubits, a second block of n qubits, and an ancilla, the method comprising:

preparing, by a system controller, each qubit in the second block in a superposition state $|+\rangle=|0\rangle+|1\rangle$;

applying, by the system controller, a CZ circuit that corresponds to the controlled-Pauli CZ gate, to the second block;

measuring, by the system controller, one or more stabilizers supported on the second block;

applying, by the system controller, controlled-NOT gates each on a pair of a qubit in the first block and a qubit in the second block;

applying, by the system controller, a Hadamard gate on each qubit in the first block;

measuring, by the system controller, the first block; and

applying, by the system controller, a Pauli operator to the second block based on the measurement of the first block.

The method may include:
returning to the preparing of each qubit in the second block in a superposition state $|+\rangle=|0\rangle+|1\rangle$, if a fault is detected by the measuring of the one or more stabilizers.
The Pauli operator may comprise a sequence of controlled-Pauli operations.
The one or more stabilizers may be measured using an ancilla qubit and a sequence of Pauli operations.
Each qubit may comprise a physical qubit.
Each qubit may comprise a logical qubit.
According to a further aspect there is provided a method of implementing an n-qubit Clifford circuit on a quantum processor comprising a first block of n qubits, a second block of n qubits, a third block of n qubits, a fourth block of n qubits, a fifth block of n qubits, and ancilla qubits, the method comprising:

decomposing, by a classical computer, the n-qubit Clifford circuit into n-qubit sub-circuits;

preparing, by a system controller, n Bell states each on a pair of a qubit in the second block and a qubit in the third block;

applying, by the system controller, one of the n-qubit sub-circuits to the third block;

measuring, by the system controller, one or more stabilizers supported on the second block and the third block;

applying, by the system controller, controlled-NOT gates each on a pair of a qubit in the first block and a qubit in the second block;

applying, by the system controller, a Hadamard gate on each qubit in the first block;

measuring, by the system controller, the first block and the second block;

applying, by the system controller, an n-qubit Pauli operator to the third block based on the measurement of the first block and the second block;

preparing, by the system controller, n Bell states each on a pair of a qubit in the fourth block and a qubit in the fifth block;

applying, by the system controller, another one of the n-qubit sub-circuits to the fifth block;

measuring, by the system controller, one or more stabilizers supported on the fourth block and the fifth block;

applying, by the system controller, controlled-NOT gates each on a pair of a qubit in the third block and a qubit in the fourth block;

applying, by the system controller, a Hadamard gate on each qubit in the third block;

measuring, by the system controller, the third block and the fourth block; and applying, by the system controller, the n-qubit Pauli operator to the fifth block based on the measurement of the third block and the fourth block.

The method may further comprise:
returning to the preparing of n Bell states each on a pair of a qubit in the second block and a qubit in the third block, if a fault is detected by the measuring of the one or more stabilizers supported on the second block and the third block.

The method may further comprise:

returning to the preparing of n Bell states each on a pair of a qubit in the fourth block and a qubit in the fifth block, if a fault is detected by the measuring of the one or more stabilizers supported on the fourth block and the fifth block.

The n-qubit Pauli operator may comprise a sequence of controlled-Pauli operations.

The one or more stabilizers may be measured using an ancilla qubit and a sequence of controlled-Pauli operations.

Each qubit may comprise a physical qubit.

Each qubit may comprise a logical qubit.

## BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.

Figure 1 is a schematic partial view of an ion trap quantum computing system according to one embodiment.

Figure 2A depicts a schematic energy diagram of each ion in an ion chain according to one embodiment.

Figure 2B depicts a schematic motional sideband spectrum of an ion in an ion chain according to one embodiment.

Figure 3 depicts a Clifford noise reduction (CliNR) according to one embodiment.

Figure 4A depicts a gate teleportation circuit according to one embodiment.

Figure 4B depicts a one-bit gate teleportation circuit according to one embodiment.

Figure 5A depicts a teleportation of five qubits according to one embodiment.

Figure 5B depicts a graph state injection circuit according to one embodiment.

Figure 6 depicts a CZ noise reduction (CZNR) circuit according to one embodiment.

Figure 7A shows an example of ordered tree with labeled vertices. Figure 7B depicts the circuit obtained after applying the transformation of algorithm 1 to the level-1 vertices. Figure 7C depicts circuit *CliNR(T, C)*.

Figure 8 depicts an example of a bounded tree of depth 2.

Figure 9 depicts a method of estimating logical error and gate overhead.

Figures 10A and 10B depict analytical estimates of performance.

Figure 11 depicts the simulated Pareto frontier with labels for the tree used at each data point.

Figures 12A and 12B depict analytical estimates compared with numerical simulation.

To facilitate understanding, identical reference numerals have been used, where possible, to designate identical elements that are common to the figures. In the figures and the following description, an orthogonal coordinate system including an X-axis, a Y-axis, and a Z-axis is used. The directions represented by the arrows in the drawing are assumed to be positive directions for convenience. It is contemplated that elements disclosed in some embodiments may be beneficially utilized on other implementations without specific recitation.

## DETAILED DESCRIPTION

Embodiments described herein are generally related to a method of implementing Clifford circuits, and more specifically, to a method of reducing logical error rate of Clifford circuits with lower overhead than error correction and without sampling cost of error mitigation using a quantum computing system that includes an ion chain including trapped ions.

## I. General Hardware Configurations

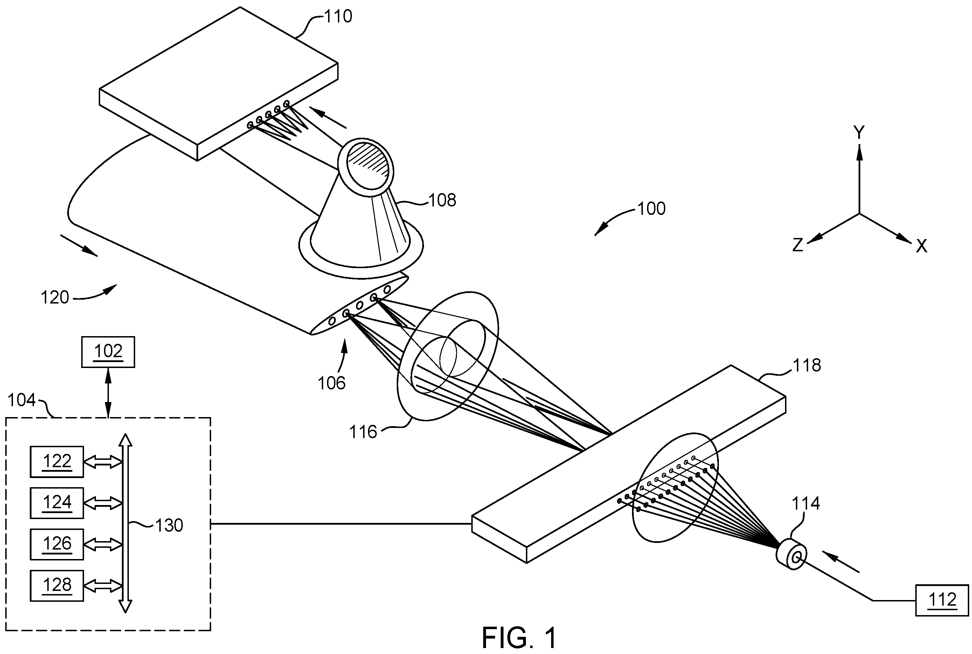

Figure 1 is a schematic partial view of an ion trap quantum computing system, or system 100, according to one embodiment. The system 100 includes a classical (digital) computer 102, a system controller 104 and a quantum processor that is an ion chain106 having trapped ions (*i.e.*, five shown) that extend along the Z-axis. The classical computer 102 includes a central processing unit (CPU), memory, and support circuits (or I/O). The memory is connected to the CPU, and may be one or more of a readily available memory, such as a read-only memory (ROM), a random access memory (RAM), floppy disk, hard disk, or any other form of digital storage, local or remote. Software instructions, algorithms and data can be coded and stored within the non-volatile memory for instructing the CPU. The support circuits (not shown) are also connected to the CPU for supporting the processor in a conventional manner. The support circuits may include conventional cache, power supplies, clock circuits, input/output circuitry, subsystems, and the like.

An imaging objective 108, such as an objective lens with a numerical aperture (NA), for example, of 0.37, collects fluorescence along the Y-axis from the ions and maps each ion onto a multi-channel photo-multiplier tube (PMT) 110 for measurement of individual ions. Non-copropagating Raman laser beams from a laser 112, which are provided along the X-axis, perform operations on the ions. A diffractive beam splitter 114 creates an array of static Raman beams 116 that are individually switched using a multi-channel acousto-optic modulator (AOM) 118 and is configured to selectively act on individual ions. A global Raman laser beam 120 illuminates all ions at once. The system controller (also referred to as an "RF controller") 104 controls the AOM 118 and thus controls laser pulses to be applied to trapped ions in the ion chain 106. The system controller 104 includes a central processing unit (CPU) 122, a read-only memory (ROM) 124, a random access memory (RAM) 126, a storage unit 128, and the like. The CPU 122 is a processor of the system controller 104. The ROM 124 stores various programs and the RAM 126 is the working memory for various programs and data. The storage unit 128 includes a nonvolatile memory, such as a hard disk drive (HDD) or a flash memory, and stores various programs even if power is turned off. The CPU 122, the ROM 124, the RAM 126, and the storage unit 128 are interconnected via a bus 130. The system controller 104 executes a control program which is stored in the ROM 124 or the storage unit 128 and uses the RAM 126 as a working area. The control program will include software applications that include program code that may be executed by processor in order to perform various functionalities associated with receiving and analyzing data and controlling any and all aspects of the methods and hardware used to create the ion trap quantum computer system 100 discussed herein.

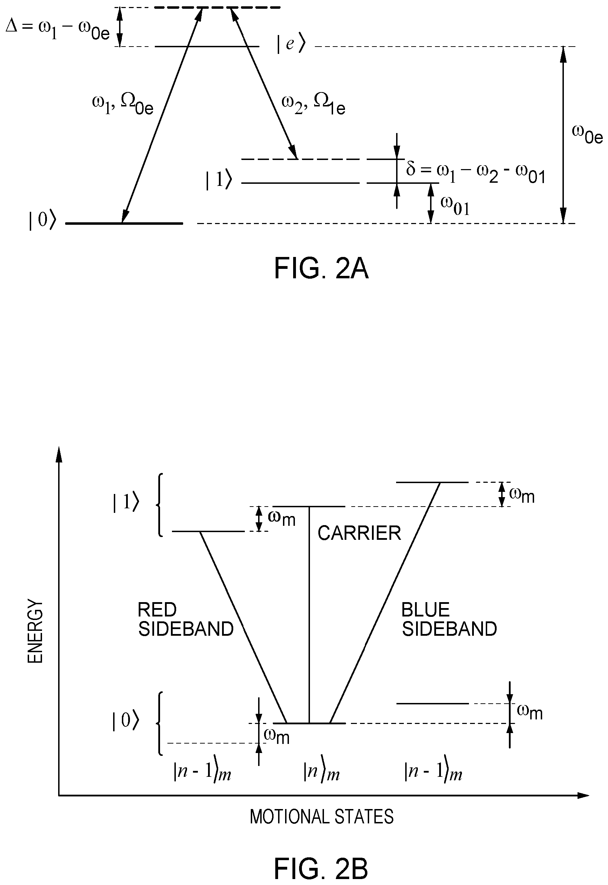

Figure 2A depicts a schematic energy diagram of each ion in the ion chain 106 according to one embodiment. In one example, each ion may be a positive Ytterbium ion, $^{171}Yb^+$, which has the $^2S_{1/2}$ hyperfine states (i.e., two electronic states) with an energy split corresponding to a frequency difference (referred to as a "carrier frequency") of $\omega_{01}/2\pi = 12.6$ GHz. A qubit is formed with the two hyperfine states, used to represent computational basis $|0\rangle$ and $|1\rangle$ ($|i\rangle$ ($i \in Z$)), where the hyperfine ground state (*i.e.*, the lower energy state of the $^2S_{1/2}$ hyperfine states) is chosen to represent $|0\rangle$. Hereinafter, the terms "hyperfine states," "internal hyperfine states," and "qubit states" may be interchangeably used to represent computational basis states $|0\rangle$ and $|1\rangle$ ($|i\rangle$ ($i \in Z$)). Each ion may be cooled (*i.e.*, kinetic energy of the ion may be reduced) to near the motional ground state $|0\rangle_m$ for any motional mode $m$ with no phonon excitation (*i.e.*, $n_{ph} = 0$) by known laser cooling methods, such as Doppler cooling or resolved sideband cooling, and then the qubit state prepared in the hyperfine ground state $|0\rangle$ by optical pumping. Here, $|0\rangle$ represents the individual qubit state of a trapped ion whereas $|0\rangle_m$ with the subscript $m$ denotes the motional ground state for a motional mode $m$ of the ion chain 106.

An individual qubit state of each trapped ion may be manipulated by, for example, a mode-locked laser at 355 nanometers (nm) via the excited $^2P_{1/2}$ level (denoted as $|e\rangle$). As shown in Figure 2A, a laser beam from the laser may be split into a pair of non-copropagating laser beams (a first laser beam with frequency $\omega_1$ and a second laser beam with frequency $\omega_2$) in the Raman configuration, and detuned by a one-photon transition detuning frequency $\Delta = \omega_1 - \omega_{0e}$ with respect to the transition frequency $\omega_{0e}$ between $|0\rangle$ and $|e\rangle$, as illustrated in Figure 2A. A two-photon transition detuning frequency $\delta$ includes adjusting the amount of energy that is provided to the trapped ion by the first and second laser beams, which when combined is used to cause the trapped ion to transfer between the hyperfine states $|0\rangle$ and $|1\rangle$. When the one-photon transition detuning frequency $\Delta$ is much larger than a two-photon transition detuning frequency (also referred to as simply as "detuning frequency") $\delta = \omega_1 - \omega_2 - \omega_{01}$ (hereinafter denoted as $\pm\mu$, $\mu$ being a positive value), single-photon Rabi frequencies $\Omega_{0e}(t)$ and $\Omega_{1e}(t)$ (which are time-dependent, and are determined by amplitudes and phases of the first and second laser beams), at which Rabi flopping between states $|0\rangle$ and $|e\rangle$ and between states $|1\rangle$ and $|e\rangle$ respectively occur, and a spontaneous emission rate from the excited state $|e\rangle$, Rabi flopping between the two hyperfine states $|0\rangle$ and $|1\rangle$ (referred to as a "carrier transition") is induced at the two-photon Rabi frequency $\Omega(t)$. The two-photon Rabi frequency $\Omega(t)$ has an intensity (*i.e.*, absolute value of amplitude) that is proportional to $\Omega_{0e}\Omega_{1e}/2\Delta$, where $\Omega_{0e}$ and $\Omega_{1e}$ are the single-photon Rabi frequencies due to the first and second laser beams, respectively. Hereinafter, this set of non-copropagating laser beams in the Raman configuration to manipulate internal hyperfine states of qubits (qubit states) may be referred to as a "composite pulse" or simply as a "pulse," and the resulting time-dependent pattern of the two-photon Rabi frequency $\Omega$ ($t$) may be referred to as an "amplitude" of a pulse or simply as a "pulse," which are illustrated and further described below. The detuning frequency $\delta = \omega_1 - \omega_2 - \omega_{01}$ may be referred to as detuning frequency of the composite pulse or detuning frequency of the pulse. The amplitude of the two-photon Rabi frequency $\Omega(t)$, which is determined by amplitudes of the first and second laser beams, may be referred to as an "amplitude" of the composite pulse.

It should be noted that the particular atomic species used in the discussion provided herein is just one example of atomic species which has stable and well-defined two-level energy structures when ionized and an excited state that is optically accessible, and thus is not intended to limit the possible configurations, specifications, or the like of an ion trap quantum computer according to the present disclosure. For example, other ion species include alkaline earth metal ions ($Be^+$, $Ca^+$, $Sr^+$, $Mg+$, and $Ba^+$) or transition metal ions ($Zn^+$, $Hg^+$, $Cd^+$).

Figure 2B depicts a schematic motional sideband spectrum of each ion in the ion chain 106 in a motional mode $|n_{ph}\rangle_M$ having frequency $\omega_m$ according to one embodiment. As illustrated in Figure 2B, when the detuning frequency of the composite pulse is zero (*i.e.*, a frequency difference between the first and second laser beams is tuned to the carrier frequency, $\delta = \omega_1 - \omega_2 - \omega_{01} = 0$), simple Rabi flopping between the qubit states $|0\rangle$ and $|1\rangle$ (carrier transition) occurs. When the detuning frequency of the composite pulse is positive (*i.e.*, the frequency difference between the first and second laser beams is tuned higher than the carrier frequency, $\delta = \omega_1 - \omega_2 - \omega_{01} = \mu > 0$, referred to as a blue sideband), Rabi flopping between combined qubit-motional states $|0\rangle n_{ph}\rangle_m$ and $|1\rangle n_{ph} + 1\rangle_m$ occurs (i.e., a transition from the m-th motional mode with n-phonon excitations denoted by $|n_{ph}\rangle_m$ to the *m*-th motional mode with ($n_{ph}$ + 1)-phonon excitations denoted by $|n_{ph} + 1\rangle_m$ occurs when the qubit state $|0\rangle$ flips to $|1\rangle$). When the detuning frequency of the composite pulse is negative (*i.e.*, the frequency difference between the first and second laser beams is tuned lower than the carrier frequency by the frequency $\omega_m$ of the motional mode $|n_{ph}\rangle_m$, $\delta = \omega_1 - \omega_2 - \omega_{01} = -\mu < 0$, referred to as a red sideband), Rabi flopping between combined qubit-motional states $|0\rangle|n_{ph}\rangle_m$ and $|1\rangle|n_{ph} - 1\rangle_m$ occurs (*i.e.*, a transition from the motional mode $|n_{ph}\rangle_m$ to the motional mode $|n_{ph} - 1\rangle_m$ with one less phonon excitations occurs when the qubit state $|0\rangle$ flips to $|1\rangle$). A $\pi/2$-pulse on the blue sideband applied to a qubit transforms the combined qubit-motional state $|0\rangle|n_{ph}\rangle_m$ into a superposition of $|0\rangle|n_{ph}\rangle_m$ and $|1\rangle|n_{ph} + 1\rangle_m$. A $\pi/2$-pulse on the red sideband applied to a qubit transforms the combined qubit-motional $|0\rangle|n_{ph}\rangle_m$ into a superposition of $|0\rangle|n_{ph}\rangle_m$ and $|1\rangle|n_{ph} - 1\rangle_m$. When the two-photon Rabi frequency $\Omega(t)$ is smaller as compared to the detuning frequency $\delta = \omega_1 - \omega_2 - \omega_{01} = \pm\mu$, the blue sideband transition or the red sideband transition may be selectively driven. Thus, qubit states of a qubit can be entangled with a desired motional mode by applying the right type of pulse, such as a $\pi/2$-pulse, which can be subsequently entangled with another qubit, leading to an entanglement between the two qubits that is needed to perform an XX-gate operation in an ion trap quantum computer.


**II. Clifford Noise Reduction Scheme CliNR**

The embodiments described herein provide a scheme for noise reduction in Clifford circuits that fills the gap between the regime of fault-tolerant quantum computing and the regime error mitigation. This Clifford noise reduction (CliNR) scheme is not fault-tolerant and it is not capable of reaching arbitrary low logical error rate, but it still reduces the logical error rate of Clifford circuits in practically relevant regimes, and it does that at the price of a small overhead. *Clifford circuits* are sequences of unitary operations $U$ that preserve Pauli operations by conjugation, that is such that for all Pauli operator $P$, the operation $UPU^{-1}$ is also a Pauli operator. The Pauli error is selected uniformly in the set of non-trivial Pauli errors acting on the support of the operation. In the numerical simulation described below, noise on idle qubits is also included, although for simplicity, this source of noise is ignored in the main theoretical result. Measurement noise is represented by a flip of the measurement outcome with probability $p$. Error corresponding to different operations is assumed to be independent and they may have different noise rate.

The CliNR scheme implements Clifford operations by gate teleportation, and uses a few random stabilizer measurements to detect errors in the resources state consumed. Gate teleportation is part of the standard fault-tolerant quantum computing toolbox. It is typically used to implement logical $T$ gates, together with $T$ state distillation. However, fault-tolerance requires to measure a complete set of stabilizer generators of the $T$ state. In the embodiments described herein, only a few stabilizer generators are measured to detect with a sufficiently large probability, without increasing significantly the fault probability because the detection circuit remains small.

The scheme according to the embodiments described herein can be seen as a teleported version of the coherent parity check (CPC) scheme, which achieves a small reduction of the logical error rate (for example, by 50% or 34%), consuming only one or few extra qubits. Increasing the number of checks leads to a more substantial reduction of the logical error rate, but results in an exponential sampling overhead. The use of gate teleportation in the CliNR scheme avoids this issue because fault-detection is performed offline. More precisely, an *n*-qubit circuit can be partitioned into smaller sub-circuits, each implemented using the CliNR scheme through a 2*n*-qubit ancilla state. The ancilla state is prepared offline, tested for the presence of faults using stabilizer measurements, and injected using gate teleportation to finish the implementation of the corresponding sub-circuit. If a fault is detected, only the ancilla state corresponding to one of the sub-circuit needs to be re-prepared and the whole circuit does not need to be restarted from the very beginning. By adjusting the size of the sub-circuits, the CliNR scheme provides an extra flexibility to optimize the trade-off between the sampling overhead and the logical error rate. Another advantage of the CliNR scheme is that the ancilla qubit used to measure the stabilizers is kept active for a shorter time than in the CPC scheme, reducing the fault-detection noise.

In the following, the problem of implementing Clifford circuits with vanishing logical error rate and low overhead in the regime of vanishing physical error rate $p \to 0$ is shown. The direct implementation provides a vanishing logical error rate for $n$-qubit Clifford circuits with size $s$ satisfying $sp \to 0$. A vanishing logical error rate for Clifford circuits can be achieved with $nsp^2 \to 0$, meaning that the CliNR scheme reaches circuits such that $ns = o(1/p^2)$, while the direct implementation requires $s = o(1/p)$. It can be shown that the CliNR scheme implements arbitrary n-qubit unitaries with vanishing logical error rate for all $n = O(p^{-2/3})$, whereas the direct implementation only reaches $O(p^{-1/2})$. Moreover, the cost of this implementation by the CliNR scheme is significantly smaller than the quantum error correction overhead and the sampling cost is negligible compare to the exponential overhead of error mitigation. Indeed, this implementation only consume $3n +$ 1 physical qubits and an average of $2s + o(s)$ single-qubit and two-qubit gates.

To illustrate the low cost of the CliNR scheme, the five-qubit code, which is the smallest stabilizer code capable of correcting arbitrary single-qubit errors, is considered. If only one ancilla qubit is used to perform error correction, it consumes 6 physical qubits to encode 1 logical qubit. Moreover, a single-round of quantum error correction requires at least 16 two-qubit gates (because this code has 4 weight-4 stabilizer measurements), 4 initializations, and 4 measurements, that is a total of at least 24 gates. A single logical identity gate would then cost at least 24 physical operations.

## III. Implementation of Quantum Circuits

### III. A Background on quantum circuits

Quantum circuits are implemented in a trapped-ion quantum computing system, such as the system 100. A system controller, such as the system controller 104, manipulates individual qubit state to implement gate operations discussed below, or measures individual qubit state.

A *circuit with size s* is a sequence of $s$ operations of the form (i) preparation of a state $|0\rangle$ or $|+\rangle$, (ii) Single-qubit unitary, (iii) Controlled-Pauli operations *CX, CY* and *CZ* on an arbitrary pair of qubits, (iv) Measurement of a qubit. A measured qubit can be re-prepared and reused.

A *unitary circuit* is a sequence of single-qubit unitaries and controlled-Pauli operations. It is a *Clifford circuit* if the single-qubit unitaries are Clifford gates and a *CZ circuit* if it contains only *CZ* gates. These circuits take as an input an $n$-qubit state and outputs an $n$-qubit state.

In the embodiments described herein, the standard circuit-level noise model where each circuit operation is followed by with a random Pauli *error rate p* is considered. Preparations and single-qubit unitaries are followed by an error *X, Y* or *Z* with probability $p/3$ each. Controlled-Pauli operations are followed by one of the 15 non-trivial Pauli errors acting on their support with probability $p/15$ each. The outcome of a measurement is flipped with probability $p$. Errors corresponding to different operations are independent. Here, it is assumed that all physical operations have the same error rate $p$ and that waiting qubits are noiseless.

Faults in a unitary circuit propagate through the circuit, resulting in an error $E$ on the output state of the circuit, are referred to as the *output error*. The output error can be computed by conjugating the circuit faults through the circuit.

### III. B Circuit implementation

An *implementation* of a Clifford circuit $C$ is a circuit $C'$ that produces the same output state as $C$ for any input state in the absence of error. The circuit-level noise induces a probability distribution over the set of output errors of an implementation. The *logical error rate* of an implementation is defined to be the probability that the output error has a non-trivial effect on the output of the circuit.

The most naive implementation of a circuit is its *direct implementation C' = C*. In general, an implementation $C'$ of a Clifford circuit $C$ uses additional qubits and gates. The extra qubits are traced out before the end of the circuit. The *qubit overhead* is defined as the number of qubits of $C'$ divided by the number of qubits in $C$. The *gate overhead* is the expected number of gates in $C'$ divided by the number of gates in $C$. A gate may be executed multiple times because of a repeat until success loop for instance. Then, it is counted as many times as it is repeated in the gate overhead.

A circuit $C'$ *implements* an $n$-qubit unitary circuit $C$ if, in the absence of fault, $C'$ produces the same output state as $C$, for any input state. The *logical error rate* for the implementation of $C$ with $C'$, denoted $p_{log}$, is defined to be the probability that faults propagate into a non-trivial output error. In this definition, the circuit $C$ is the ideal circuit to be executed and $C'$ is the noisy circuit effectively implemented. The circuit $C'$ is not restricted to unitary gates and may contains measurements and ancilla qubits. The extra qubits are traced-out at the end of the circuit to obtain an $n$-qubit output state as in $C$.

The number of qubits $n'$ and the size $s'$ of the implementation $C'$ of $C$ are random variables because the circuit $C'$

may contains random or adaptive operations. The *qubit overhead,* denoted $\omega_Q$, is defined as the ratio between the maximum number of qubits of the circuit $C'$ and the number of qubits of $C$. The *gate overhead,* denoted $\omega_G$, is defined to be the ratio between the expected number of gates of $C'$ and the number of gates of $C$. For the qubit overhead, the maximum number of qubits in $C'$ is used instead of the expectation because these qubits must physically exist in the machine, even if all of them are not used at each execution of $C'$.

As an example, the *direct implementation* of the circuit $C$ is the implementation $C' = C$. It has a qubit and gate overhead of 1 and its logical error rate is upper bounded as $p_{\log} \leq g_p(s)$ where $g_p(x) = 1 - (1 - p)^x$ and s is the size of $C$.

### IV. Clifford noise reduction circuit

Throughout this section, $C$ is an *n*-qubit Clifford circuit and $r, t \geq 1$ are two integers. The purpose of this section is to defined the *Clifford noise reduction* circuit, denoted by $\mathrm{CliNR}_{t,r}(C)$. Then, it is shown that this circuit implements $C$ and bounds on the logical error rate and the overhead of this implementation are established. First, the CliNR circuit in the case $t = 1$ is defined. Then, the general case is shown.

### IV. Noise reduction in Clifford circuits

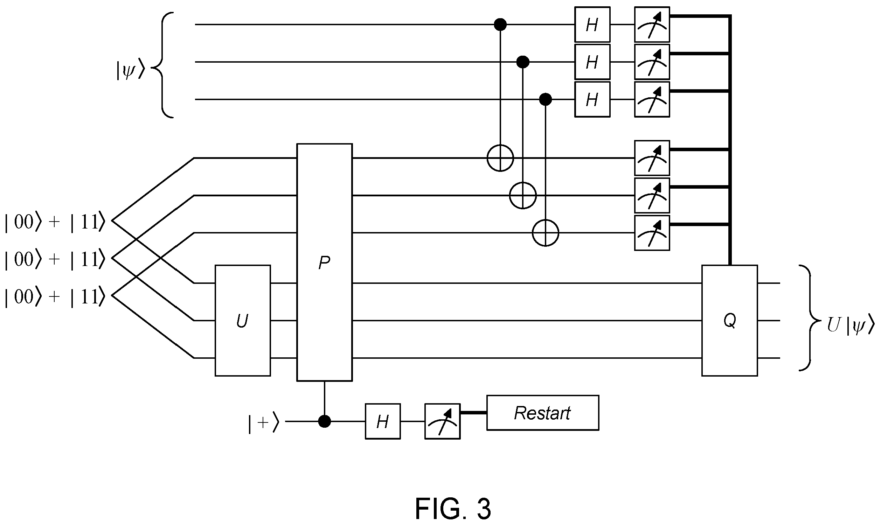

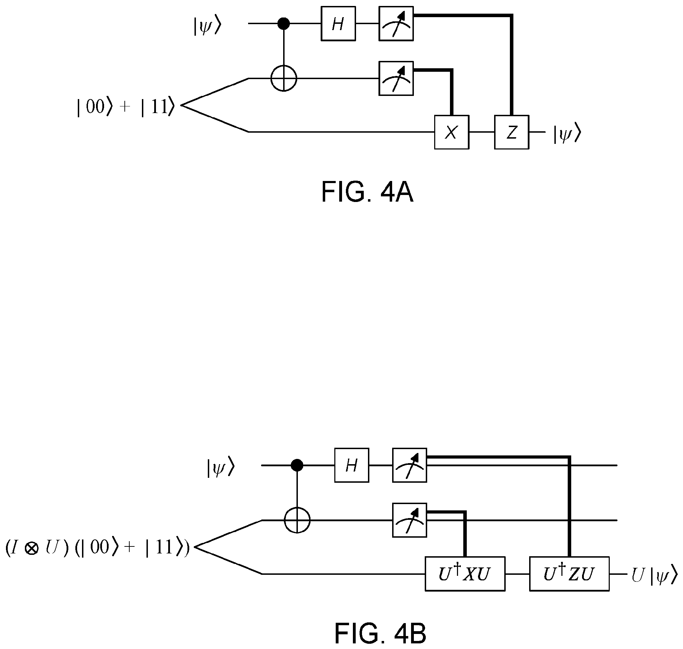

The circuit $\mathrm{CliNR}_{1,r}(C)$ is represented in Figure 3, where an *n*-qubit Clifford unitary $U$ is the unitary corresponding to an *n*-qubit Clifford circuit $C$. The circuit $\mathrm{CliNR}_{1,r}(C)$ implements $U$ by applying the n-qubit version of the gate teleportation circuit shown in Figure 4A. A one-qubit version of the gate teleportation circuit is shown in Figure 4B. However, before applying controlled-NOT (CNOT) gates of the gate teleportation circuit, errors in the ancilla state are checked by measuring r random stabilizers $P$ of this state (the case where $r = 1$ is shown in Figure 3). More precisely, $\mathrm{CliNR}_{1,r}(C)$ acts on a first block of $n$ qubits (qubits 1 to $n$), a second block of $n$ qubits (qubits $n + 1$ to $2n$), a third block $n$ qubits ($2n + 1$ to $3n$), and an ancilla qubit (qubit $3n + 1$), totaling $3n + 1$ qubits. The circuit $\mathrm{CliNR}_{1,r}(C)$ includes the following operations:

Step 1. Prepare n Bell states on the second block and the third block, where each Bell state is prepared on a pair of qubit $n + i$ in the second block and qubit $2n + i$ in the third block ($i = 1, ... ,n$).

Step 2. Apply an n-qubit Clifford circuit $C$ to the third block.

Step 3. Measure $r$ random stabilizers $P$ of the state supported on the second block and the third block ($r \geq 1$).

Step 4. If a stabilizer measurement returns a non-trivial outcome (*e.g.* a fault is detected in the second block and/or the second block), return to step 1 to restart the *n*-qubit Clifford circuit $C$.

Step 5. Apply $\mathrm{CNOT}_{i,n+i}$ gate on a pair of qubit $i$ in the first block and qubit $n + i$ in the second block, followed by a Hadamard gate $H_i$ on each qubit $i$ in the first block ($i = 1, ..., n$).

Step 6. Measure the first block and the second block, and apply an *n*-qubit Pauli operator $Q$ to the third block based on the measurement of the first block and the second block.

The stabilizers $P$ are measured sequentially using the single ancilla qubit (qubit $3n + 1$) and a sequence of up to $2n$ controlled-Pauli operations. The $r$ stabilizers $P$ are selected uniformly at random, and independent (non-trivial) stabilizer generators are picked so that non-trivial faults occurring before the stabilizer measurements are detected with probability $1 - 2^{-r}$. A new set of $r$ random stabilizer generators is selected for each run of the circuit. The ancilla qubit (qubit $3n + 1$) is prepared in a state $|+\rangle$ in each stabilizer measurement, and a Hadamard gate is applied prior to the measurement.

If any of the stabilizer measurements returns a non-trivial outcome, it becomes known that a fault must have occurred and the circuit is restarted. Crucially, these faults do not affect the input state because they are detected before the CNOT gates connecting the last $2n + 1$ qubits (in the second block and the third block) to the input state of qubits 1 to $n$ in the first block).

The *n*-qubit Pauli operator $Q$ is

$$Q = \prod_{i=1}^{n} (U^{\dagger} X_{2n+i} U)^{o_{n+i}} (U^{\dagger} Z_{2n+i} U)^{o_i} \qquad (1)$$

where $o_i$ is the outcome of the measurement of the *i*-th qubit in the first block and the second block.

It should be noted that each qubit is a physical qubit (*i.e.*, a trapped ion) or a logical qubit that is encoded using a collection of physical qubits to protect against errors (*i.e.*, a collection of trapped ions).

A bound on the performance of the CliNR implementation with $t = 1$ is discussed in the attached Appendix in an effort to illustrate a more general result.

**IV.B Concatenated noise reduction in Clifford circuits**

Like with the coherent parity check (CPC) scheme, the main limitation of the CliNR scheme with $t = 1$ is that the gate overhead blows up when the circuit size s gets close to 1/p because the restart probability increases rapidly. To extend the noise reduction scheme to larger circuits, the input circuit C is decomposed into $t$ smaller sub-circuits, by a classical computer, such as the classical computer 102, and the CliNR(1,$r$) is applied to each of these sub-circuits.

For $t \geq 1$, the circuit $\text{CliNR}_{t,r}(C)$ is defined by writing C as the concatenation of $t$ sub-circuits $C_1, ..., C_t$ and by applying $\text{CliNR}_{1,r}$ to each sub-circuit. In other words, it is the concatenation of the circuits $\text{CliNR}_{1,r}(C_1), ..., \text{CliNR}_{1,r}(C_t)$. Formally, the first block and the third block need to be swapped to concatenate two such circuits. These swaps can be done fully in software by re-labelling the qubits without any quantum operations.

In what follows, the notation $s_0 := \lceil s/t \rceil$ is used. If $s$ is a multiple of $t$, each sub-circuit has size $s_0$. Otherwise, the first s mod $t$ sub-circuits have size $s_0$ and the remaining ones have size $s_0 - 1$.

**Theorem 1** *The circuit $\text{CliNR}_{t,r}(C)$ implements the circuit C with logical error rate*

$$p_{\log} \leq t \cdot \frac{g_p(3n+s_0)2^{-r}+2g_p(2n+3)+g_p(5n)}{(1-p)^{m_0}} \qquad (2)$$

where $m_0 = 3n + s_0 + (2n + 3)r$. Moreover, the overhead satisfies $\omega_Q = 3 + \frac{1}{n}$ and $\omega_G \leq \frac{10n}{s_0} + \frac{2m_0}{s_0(1-p)^{m_0}}$.

If the sub-circuit size $s_0$ is fixed, that is for $t$ proportional with $s$, the qubit and gate overhead are independent of the total circuit size $s$. This results in a scalable scheme whose gate overhead is independent on the size $s$ of the input circuit. This approach works with the CliNR implementation because the fault-detection is performed offline and it does not directly apply to the standard CPC scheme.

*Proof.* The fact that $\text{CliNR}_{t,r}(C)$ implements $C$ is clear because it is proven in Lemma 3 that each sub-circuit $C_i$ is implemented by $\text{CliNR}_{1,r}(C_i)$.

The logical error rate is at most $t$ times the logical error rate per sub-circuit, for which the bound from Lemma 3 is used.

The qubit overhead is clear. The expected number of operations in the implementation of one of the sub-circuit is at most $s_0\omega_G'$ where $\omega_G'$ is the maximum gate overhead for a sub-circuit. By linearity of the expectation, the expected number of operations for the implementation of the entire circuit $C$ is upper bounded by $ts_0\omega_G'$. Using

$$ts_0 \leq t\lceil s/t \rceil \leq s + t \leq 2s$$

(if $t \geq s$, the last $t - s$ sub-circuits $C_i$ have size 0), the following holds:

$$\omega_G \leq \frac{ts_0\omega_{G'}}{s} \leq 2\omega_G' \quad (3)$$

Plugging in the bound on the gate overhead obtained in Lemma 3 leads to the bound announced in Theorem 1.

**IV.C Threshold for the implementation of Clifford circuit**

Here, the problem of implementing a family of $n$-qubit Clifford circuits with vanishing logical error rate and low overhead is considered, in the regime where the physical error rate $p$ goes to 0.

Throughout this section, a family $(C_j)_{j \in \mathbb{N}}$ of Clifford circuits, acting on $n_j$ qubits with size $s_j$ is considered. It is assumed that it is implemented with qubits with physical error rate $p_j$. To keep the notation simple, the index $j$ is omitted and it is written as $sp \rightarrow 0$ and $snp^2 \rightarrow 0$.

*A family of n-qubit Clifford circuits with size s is now considered. If $sp \rightarrow 0$, then these circuits can be implemented with vanishing logical error rate. Moreover, the qubit overhead is 1 and the gate overhead is 1.*

In other words the direct implementation can implement circuits with size $s = o(1/p)$. Theorem 2 shows that the CliNR implementation can reach larger circuits while keeping the overhead small.

**Theorem 2 ($snp^2$ threshold)** *Consider a family of n-qubit Clifford circuits with size s. If $snp^2 \rightarrow 0$, then these circuits can be implemented with vanishing logical error rate. Moreover,* $\limsup \omega_Q \leq 3$ *and* $\limsup \omega_G \leq 2$.

This result goes beyond the direct implementation as it implements circuits with size up to $s = o(1/p^2)$. It is based

on the CliNR implementation with parameters $t$, $r$ given in (9). This implementation achieves a remarkably small overhead, making it more practical than full fault tolerance in the near term. The proof of Theorem 2 relies on the following lemma.

**Lemma 1** *If $nr = o(s_0)$ and $s_0 p \to 0$, then*

$$p_{\log} = O\left(\frac{t s_0 2^{-r} p + 9 t n p}{1 - s_0 p} \cdot\right) \quad (4)$$

Moreover, the overhead satisfies lim sup $\omega_Q \leq 3$ and lim sup $\omega_G \leq 2$.

*Proof.* The asymptotic equivalent of the upper bound on $p_{\log}$ obtained in (2). The expansion $gp(\ell) = \ell p + o((\ell p)^2)$, which is valid when $\ell p \to 0$, leads to a numerator dominated by

$$t((As_0 + A'n)2^{-r} + (Bn + B'))p \quad (5)$$

with $A = 1, A' = 3, B = 9$ and $B' = 6$. Using the assumption $nr = o(s_0)$, the term $A'n$, dominated by $As_0$, and $B'$, dominated by $Bn$, can be discarded. For the denominator, $(1 - p)^m = 1 - mp + o((mp)^2)$ is used. This proves (4).

The qubit overhead bound is immediate from Theorem 1. The first term $\frac{10n}{s_0}$ of the gate overhead bound in Theorem 1 is vanishing. In the second term $\frac{2m_0}{s_0(1-p)^{m_0}}$ of this bound, the fraction $\frac{2m_0}{s_0}$ goes to 2, because $m_0$ is equivalent to $s_0$, and $\frac{1}{(1-p)^{m_0}} = e^{-m_0 p + o((m_0 p)^2)}$ goes to 1.

*Proof of Theorem 2.* Let $\varepsilon := snp^2$. It is assumed $\varepsilon \to 0$. If $s < \frac{\varepsilon^{1/4}}{p}$, then $s = o\left(\frac{1}{p}\right)$ and the direct implementation is enough to achieve a vanishing logical error rate and to prove the result.

In the remainder of this proof, it is assumed that

$$s \geq \frac{\varepsilon^{1/4}}{p} \cdot \quad (6)$$

In this regime, the following holds:

$$n = \frac{\varepsilon}{sp^2} \leq \frac{\varepsilon^{3/4}}{p} = o\left(\frac{1}{p}\right) \quad (7)$$

and

$$\frac{n}{s} \leq \sqrt{\varepsilon} \to 0 \cdot \quad (8)$$

Considered the implementation $C' = CliNR_{t,r}(C)$ with

$$r := \left\lceil \log(\tfrac{s}{n}) \right\rceil \text{ and } t := \left\lfloor \sqrt{\tfrac{s}{n}} \right\rfloor \cdot \quad (9)$$

It can be first proven that, with these values of $t$ and $r$, Lemma 1 applies. Because $s_0$ is proportional with $\frac{s}{t}$, plugging in the values of r and $t$, it is found that

$$\frac{rn}{s_0} = O\left(\frac{rnt}{s}\right) = O\left(\log\left(\tfrac{s}{n}\right)\sqrt{\tfrac{n}{s}}\right) \quad (10)$$

which goes to 0 based on (8). For $s_0 p$, it is found that

$$s_0 p = O\left(\frac{sp}{t}\right) = O\left(\sqrt{sn}p\right) \quad (11)$$

which goes to 0 because it is the square root of $snp^2$, that vanishes by assumption. This proves that $\frac{rn}{s_0}$ and $s_0 p \to 0$ and therefore Lemma 1 can be applied.

To show that the logical error rate of the implementation $C'$ vanishes, it is sufficient to prove that the bound in (4) tends to 0. Based on (11), the denominator goes to 1, so it is enough to show that $t s_0 p 2^{-r}$ and $tnp$ go to 0. Using $t s_0 = O(s)$ and

$2^{-r} = O\left(\frac{n}{s}\right)$, it is found that:

$$t s_0 p 2^{-r} = O(np) \quad (12)$$

which goes to 0 by (7). For $tnp$, it is found that:

$$tnp = O\left(\sqrt{sn}p\right) \quad (13)$$

which goes to 0 because $snp^2$ does. It has been proven that Lemma 1 applies leads to a vanishing upper bound on $p_{\log}$, concluding the proof.

**Corollary 1 (size-$n^\alpha$ threshold)** *Consider a family of n-qubit Clifford circuits with size $s = O(n^\alpha)$ for some $\alpha > 0$. If*

$np^{\frac{2}{1+\alpha}} \to 0$, *these circuits can be implemented with vanishing logical error rate. Moreover,* lim $sup\omega_Q \leq 3$ *and* lims $up\omega_G \leq 2$.

This result applies to circuits acting on up to $n = O(p^{-\frac{2}{1+\alpha}})$ qubits, whereas the direct implementation only reaches $n = O\left(p^{-\frac{1}{\alpha}}\right)$.

*Proof.* Using $s = O(n^\alpha)$ and $n = o\left(p^{-\frac{2}{1+\alpha}}\right)$, it is found that

$$sn = O(n^{1+\alpha}) = o(p^{-2}) \quad (14)$$

showing that Theorem 2 applies, proving the result.

**Corollary 2 (Clifford unitary threshold)** *If $p \to 0$ and* $n = O\left(p^{-\frac{2}{3}}\right)$, *arbitrary n-qubit Clifford unitaries can be implemented with vanishing logical error rate. Moreover,* lim sup $\omega_Q \leq 3$ *and* lim sup $\omega_G \leq 2$.

Again, this goes beyond the direct implementation which only reaches $n = O\left(p^{-\frac{1}{2}}\right)$.

*Proof.* Any $n$-qubit Clifford unitary $U$ can be implemented with a Clifford circuit $C$ with size $s = O(n^2/\log(n)) = o(n^2)$. Hence, using $n = O\left(p^{-\frac{2}{3}}\right)$, it is found that $sn = o(n^3) = o(p^{-2})$. This prove the result by applying Theorem 2.

## V. CZ noise reduction circuit

Here, it is shown that the CliNR circuit can be simplified in the case of a Clifford circuit containing only CZ gates. The basic idea is to implement a sequence of CZ using the one-bit teleportation, shown in Figure 4B, instead of the original teleportation circuit. This results in a circuit that can be seen as a state injection circuit, similar to the $T$-state injection circuit, where the resource state is a graph state instead of a $T$-state.

## V. A Graph state injection circuit

Any *n*-qubit unitary made with a sequence of controlled-Pauli *CZ* gates can be represented by a graph *G* with n vertices, corresponding to the qubits, and whose edges are in one-to-one correspondence with the *CZ* gates in the circuit. The unitary associated with *G* is denoted $U_G$.

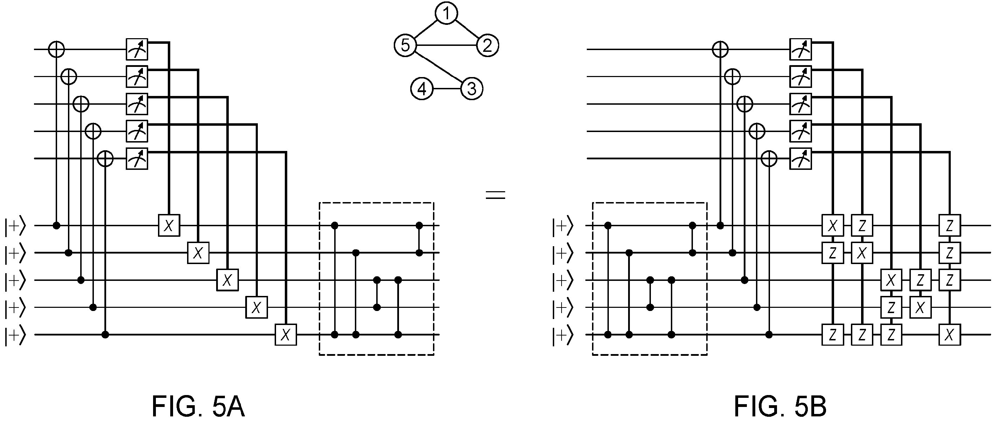

The *graph state injection circuit,* represented in Figure 5A, associated with a graph *G* with *n* vertices is the 2*n*-qubit circuit defined as follows. Assume that the vertices of *G* are indexed by 1,2, ... , *n* and the qubits are indexed by 1,2, ... , 2*n*. First, qubits *n* + 1, *n* + 2, ... , 2*n* are initialized in the state |+⟩. Then, for each edge {*i, j*} in *G*, apply a *CZ* gate between qubit *n* + *i* and qubit *n* + *j*. This prepares the so-called *graph state,* denoted |*G*⟩, on the last *n* qubits. Then, implement *CNOT* gates controlled on qubit *n* + *i* and targeting qubit *i* for *i* = 1,2, ... , *n*. After the *CNOT,* the first *n* qubits are measured. If the outcome of the i-th measurement is non-trivial, the Pauli operator

$$X_{n+i} \prod_{j \in N(i)} Z_{n+j} \quad (15)$$

is applied, where *N*(*i*) denotes the set of neighbors of vertex *i* in *G*.

The following lemma shows that the graph state injection circuit consumes the graph state |*G*⟩ prepared on the second block of qubits to implement the operation $U_G$.

**Lemma 2 (Graph state injection circuit)** *The state-injection circuit simultaneously performs the teleportation of the state of the first n qubits onto the last n qubits, and apply the unitary $U_G$ to this state.*

*Proof.* By commuting the sequence of *CZ* to the end of the graph state injection circuit, it can be seen that this circuit is equivalent to applying the one-bit teleportation circuit to the *n* input qubits and applying the *CZ* gates, that is $U_G$, to the output qubits of the teleportations. This is clear by examination of Figures 5A and 5B.

## V. B. Noise reduction in CZ circuits

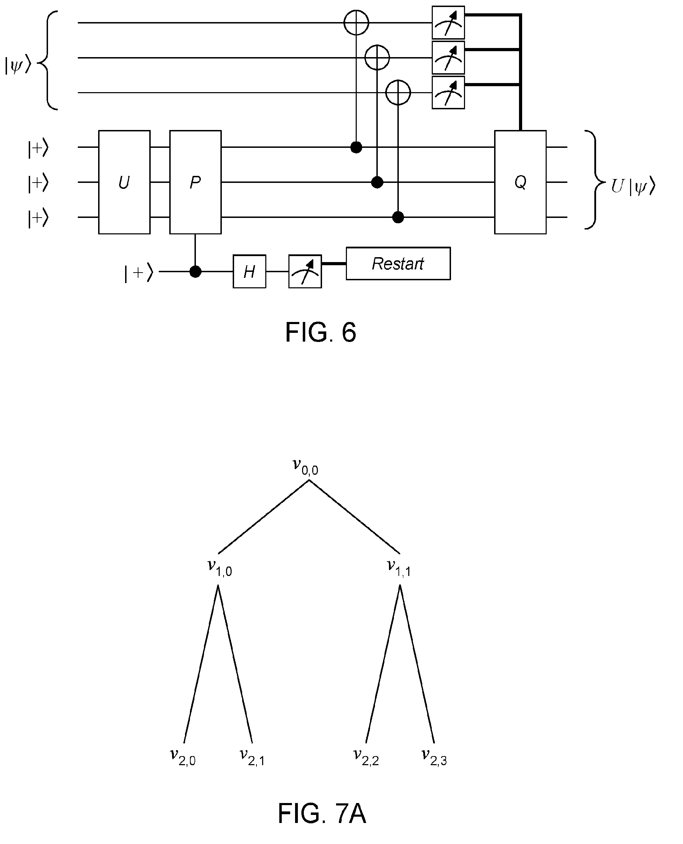

Similarly to the CliNR circuit, the *CZ noise reduction* (CZNR) circuit, described in Figure 6, is obtained by inserting r stabilizer measurements in the graph state injection circuit, right after the graph state preparation.

Like in the CliNR circuit, the stabilizers are independent stabilizers, selected uniformly at random in the stabilizer group of the first *n* ancilla qubits and a new set of *r* stabilizer generators is selected for each run of the circuit. The circuit restarts if one of the stabilizer measurement returns a non-trivial outcome. The CZNR circuit is limited to *CZ* circuit but because it is built from the one-bit teleportation circuit, it consumes only n ancilla qubits instead of 2*n*. The analog of CliNR$_{t,r}$ (*C*) for controlled-Pauli *CZ* circuits is denoted by CZNR$_{t,r}$(*C*). More precisely, CZNR$_{t,r}$(*C*) acts on a first block of *n* qubits (qubits 1 to *n*), a second block of *n* qubits (qubits *n* + 1 to 2*n*), and an ancilla qubit (qubit 2*n* + 1), totaling 2*n* + 1 qubits. The circuit CZNR$_{t,r}$(*C*) includes the following operations:

Step 1. Prepare each qubit i in the second block in a superposition state |+⟩ = |0⟩ + |1⟩ (*i* = 1, ...,*n*).
Step 2. Apply a *CZ* circuit qubit *n* + *i* and qubit *n* + *j* in the second block.
Step 3. Measure *r* random stabilizers *P* of the state supported on the second block.
Step 4. If a stabilizer measurement returns a non-trivial outcome (*e.g.* a fault is detected in the second block), return to step 1 to restart the *CZ* circuit.
Step 5. Apply CNOT$_{i,n+i}$ gate on a pair of qubit *i* in the first block and qubit *n* + *i* in the second block, followed by a Hadamard gate $H_i$ on each qubit i in the first block (*i* = 1, ... , *n*).
Step 6. Measure the first block, and apply the Pauli operator to the second block based on the measurement of the first block.

The following result is adapted from Theorem 1 to the case of *CZ* circuits.

**Theorem 3** *The circuit CZNR$_{t,r}$(C) implements a CZ circuit C with logical error rate*

$$p_{\log} \le t \cdot \frac{g_p(n+s)2^{-r} + 2g_p(n+3) + g_p(3n)}{(1-p)^{m_0}} \quad (16)$$

*and overhead*

$$\begin{cases} \omega_Q = 2 + \frac{1}{n}, \\ \omega_G \leq \frac{6n}{s_0} + \frac{2m_0}{s_0(1-p)^m} \end{cases} \quad (17)$$

where

$$m = n + s_0 + (n + 3)r.$$

The proof of this result is omitted as it is an immediate application of the same technique used to prove Lemma 3 and Theorem 1.

The embodiments described herein provide a method for error reduction in Clifford circuits offering a low-cost alternative to error correction in near term devices. Clifford circuits are split into small sub-circuits that are implemented by gate teleportation. Faults are detected by measuring stabilizers of the resource states consumed by the gate teleportation circuit. Instead of stabilizer measurements, the resource states can also be verified using coherent parity checks or by measuring gauge generators of the space-time code of the circuit.

The CliNR scheme focuses on fully connected qubits but the scheme can be adapted to other qubit topologies at a moderate price in term of overhead as demonstrated with the CPC scheme.

This CliNR scheme is limited to Clifford circuits that are not computationally universal. To achieve universality, it suffices to insert a round of single-qubit rotations after each use the CliNR scheme. These extra gates do not significantly increase the logical error rate. Indeed, the bound of (2) still holds after replacing $5n$ by $6n$ in the numerator.

The aim of this protocol CliNR is to reduce the logical error in the implementation of a Clifford circuit. Consider a unitary $n$-qubit Clifford circuit C with size s (*i.e.* C has s unitary gates). Given an integer $r$, the CliNR implementation, denoted $CliNR_{1,r}(C)$, is defined as the following 3 step process:

1. **Resource state preparation (RSP).** A $2n$-qubit resource (stabilizer) state $|\psi\rangle$ is prepared in the following way: First $n$ Bell states are prepared (using at most $A_P n$ noisy gates) and then the circuit C is implemented on $n$ qubits, one from each pair (using s noisy gates).

2. **Resource state verification (RSV).** The resource state is verified by measuring $r$ stabilizers. Here it is assumed that these are chosen randomly from the set of stabilizers for $|\psi\rangle$. Errors are detected with probability $1 - 2^{-r}$. This process can be done with a single ancilla and requires at most $A_V n + B_V$ noisy gates.

3. **Resource state injection (RSI).** If all stabilizer checks have a trivial outcome (no errors detected) the sub-circuit C is applied to an $n$-qubit input state by consuming the resource state $|\psi\rangle$. This process takes at most $A_I n$ noisy gates.

Therein, $A_P, A_V, B_V$ and $A_I$ are constants that depend on the specifics of the implementation.

RSV is used to suppress the errors in RSP which are generally dominated by errors in C, however this comes at the cost of needing to re-start the circuit when an error is detected and additionally at the cost of more error sources. It has been noted that when C is long, it can be advantageous to break it down into $t$ sub-circuits $C_i$, and applying $CliNR_{1,r}$ to each one. This reduces the probability of error and of a restart in each one, but increases the overall error due to the gate overhead, in particular the errors in RSI. The CliNR implementation of C using a decomposition of C into $t$ sub-circuits with $r$ stabilizer measurement per sub-circuit is denoted $CliNR_{t,r}(C)$.

$CliNR_{t,r}$ requires $t$ RSI rounds. These are not verified and can lead to large logical errors. Consequently there is a limit on the size of the C that can be implemented, even at vanishing error rates. It has been shown that errors can be arbitrarily small as long as $snp^2 \rightarrow 0$. In the embodiments described herein, a generalization of this idea has been provided that allows application of *CliNR* to sequences of *CliNR* circuits potentially reducing the logical error rate. Below it is proven that an arbitrarily low error rate can be achieved when $np \rightarrow 0$, *i.e.* independently of the circuit size, at the cost a gate overhead $\omega \leq O(log(sp))$. It should be noted, log denotes the base 2 logarithm.

## VI. Recursive *CliNR*

This section introduces a recursive generalization of the *CliNR* scheme.

Recall first that an ordered tree is a rooted tree such that for any vertex $u$, the children of $u$ have a specific order $v_0$, $v_1$, *etc.* If a tree is ordered, its vertices can be labeled as $v_{\ell,i}$, where $\ell \in \mathbb{N}$ is the distance to the root, and i is the index of the vertex among the vertices at distance $\ell$ from the root. For example, the vertices of a 4-regular tree are indexed as $v_{0,0}$, $v_{1,0}$, $v_{1,1}$, $v_{1,2}$, $v_{1,3}$, $v_{2,0}$, $v_{2,1}$, *etc.* Figure 7A shows an example of ordered tree with labeled vertices.

A *CliNR tree,* denoted $T(s, r)$ or simply $T$, is a finite ordered tree, equipped with two functions $s$ and $r$ defined over the vertex set of the CliNR tree $T$. These functions assign non-negative integers $s(u)$ and $r(u)$ to each vertex $u$ of the tree. It is required that, for any vertex $u$, the sum of the values $s(v)$ associated with its children $v$ is equal to $s(u)$.

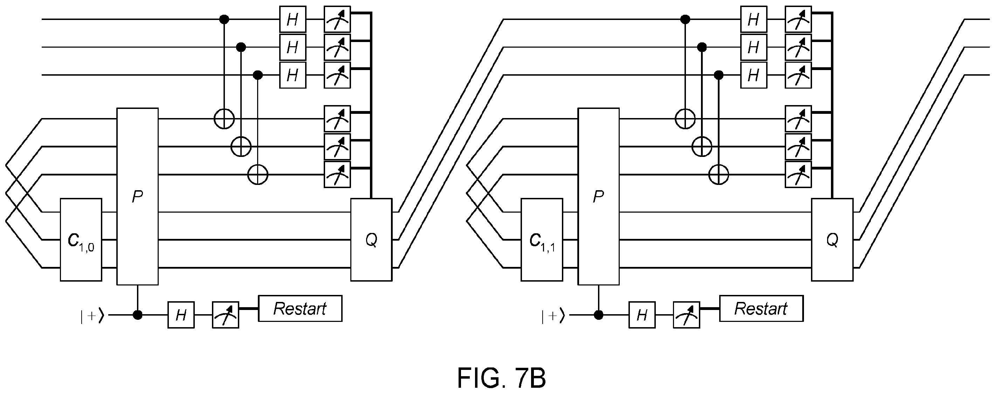

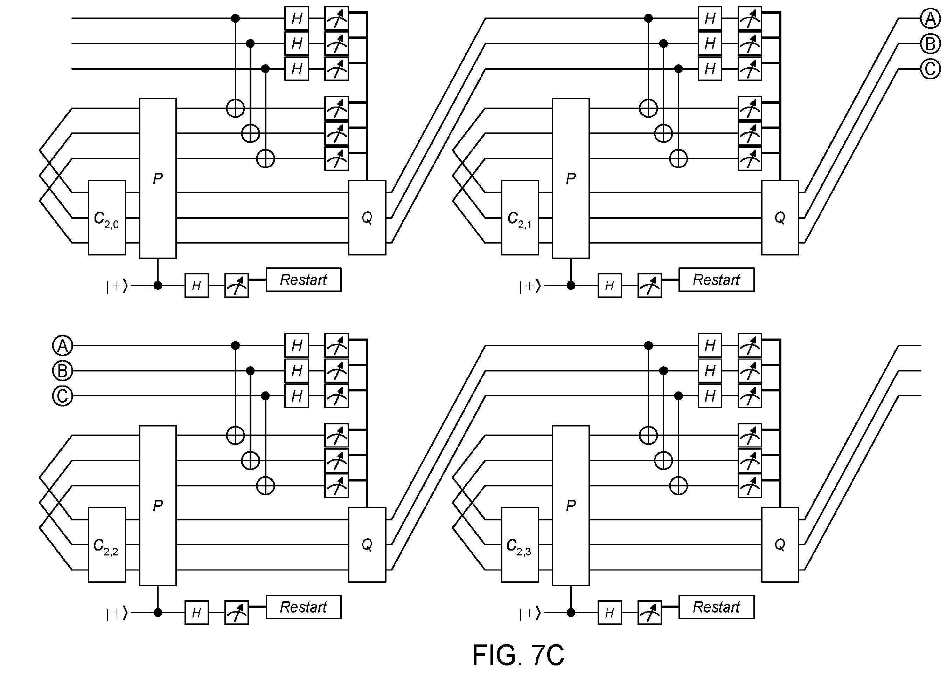

Let $C$ be a $n$-qubit Clifford circuit and let $T$ be a CliNR tree such that $s(u)$ is equal to the size of the Clifford circuit $C$ if $u$ is the root of $T$. The *recursive CliNR implementation* of the Clifford circuit $C$, denoted *CliNR(T, C)*, is the implementation obtained by applying the procedure described in the algorithm 1 in Table I, to the Clifford circuit $C$. Figures 7A, 7B and 7C provide a step-by-step illustration of this construction.

Figure 7B depicts the circuit obtained after applying the transformation of algorithm 1 to the level-1 vertices. The input Clifford circuit $C$ is written as the concatenation of two sub-circuits $C_{1,0}$ and $C_{1,1}$ and each sub-circuit is implemented using $CliNR_{1,r}$. Figure 7C depicts the circuit $CliNR(T, C)$. It is obtained by writing each sub-circuit $C_{1,i}$ in Figure 7B as the concatenation of two sub-circuits that are implemented them using $CliNR_{1,r}$. For simplicity, only a single stabilizer measurement $P$ is included per *CliNR* block (that is $r(v) = 1$). The value of the single stabilizer measurement $P$ depends on the preceding sub-circuit $C_{\ell,i}$.

## Table I: Algorithm 1: Generalized *CliNR* circuit

Input : A Clifford circuit $C$ and a *CliNR* tree.
$$T = T(s, r)$$

Output The implementation $CliNR(T, C)$ of $C$.

1 Let $C_{0,0} = C$ and let $C' = C_{0,0}$.

2 **for** *all vertices $v_{\ell,i}$ of $T$ in lexicographic order* **do**

3      **for** *all children $v_{\ell+1,j}$ of $v_{\ell,i}$ in lexicographic order* **do**

4          Let $s = s(v_{\ell+1,j})$ and $r = r(v_{\ell+1,j})$.

5          Let $C_{\ell+1,j}$ be the circuit made with the first $s$ unmarked gates of $C_{\ell,i}$.

6          Replace the sub-circuit $C_{\ell+1,j}$ inside $C'$ by $CliNR_{1,r}(C_{\ell+1,j})$.

7          Mark the first $s$ unmarked gates of $C_{\ell,i}$.

8 **return** $C'$.

In the algorithm 1, the value of $r$ at the root is not used. One could extend the construction by adding $r(v_{0,0})$ stabilizer measurements at the end of the circuit.

The implementation *CliNR(T,C)* is a proper generalization of the *CliNR* implementations. Indeed, the implementation $CliNR_{1,r}(C)$ is recovered by taking a tree with two vertices $v_{0,0}$ and $v_{1,0}$ such that $r(v_{1,0}) = r$. The implementation $CliNR_{t,r}(C)$ is derived from a depth-one tree with a root and $t$ children.

There are many possible choices for the stabilizers used to define *CliNR(T, C)*. The only requirement is that they belong to the stabilizer group of the resources state consumed by in $CliNR_{1,r}$ in the algorithm 1. Examples include random stabilizer generators, and optimization strategies to select these stabilizer more carefully.

For simplicity, the pseudo-code does not include the ancilla allocation in the algorithm 1 above. The ancilla application is discussed here.

**Lemma 1 (qubit overhead)** *The CliNR scheme associated with a tree with depth D can be implemented using* $(2D + 1)n + 1$ *qubits.*

*Proof.* Each use of $CliNR_{1,r}$ in the algorithm 1 consumes $2n + 1$ ancilla qubits but these qubits can be reused. If the tree $T$ has depth $D$, the implementation $CliNR(T, C)$ consumes $n$ data qubits, on which $C$ is applied, $D$ registers of $2n$ ancilla qubits to perform the teleportations, and 1 extra ancilla qubit used for stabilizer measurements. All the sub-circuits $CliNR_{1,r}(C_{\ell+1,j})$ corresponding to the level $\ell$ of the tree are implemented using the $\ell$-th register of ancilla qubits.

The qubit overhead of the scheme is therefore $\frac{(2D+1)n+1}{n}$ which is equivalent to $2D + 1$ when $n \to +\infty$. The gate overhead is more subtle as it depends on the noise rate and it is analyzed below.

Much of the motivation for *CliNR* comes from the limited resources expected in near-term quantum computers so most of the analysis focuses on the implementation that reduced the number of ancilla qubits. It is however useful to note that in terms of running-time it is possible to parallelize all sequential implementations of *CliNR*, potentially leading to significant improvements in running time. Optimizing for reducing the impact of idle errors may be specifically important in regimes where the number of ancilla qubits available is relatively high.

## VI.A CliNR implementation with a bottom-up regular tree

To provide a constructive proof that it is possible to reduce the logical error arbitrarily as long as $np \to 0$, the embodiments described herein include construction of a CliNR tree that keeps the error rate associated with each the Clifford input to each vertex below some fixed value $p_b$ and ensure that *CliNR$_{1,r}(p_b)$* is upper bounded by *Anp* where *A* is a constant. At the bottom layer (*D*) this is possible if sub-circuits that are small enough are chosen and also $r_{\ell,j}$ are chosen in a way that reduced the logical error from RSP to the same level as the logical error from RSV. This is done by setting $r_{\ell,j} = r = r$

$$= \lceil \log(pA_I n(1 - p_b) + p_b) - \log(2A_V np)) \rceil$$

. At the next layer (and iteratively up to layer 1) groups of *t* vertices are taken such that $tAnp \le p_b$ and feed them to the next vertex up ensuring that the error associated with each individual *CliNR$_1$* circuit implementation is at most *Anp*.

**Definition 1 (Bounded error CliNR tree)** *A bounded error CliNR tree, $T^B = p_b,D$ with error bound $p_b$ is a CliNR tree for C constructed using algorithm 2,* shown in Table II.

Table II: Algorithm 2: Algorithm for generating a bounded error tree $T^{B=p,D}$

| | | |
|---|---|---|
| **input** | | An $n$ qubit Clifford circuit $C$, an error rate $p$, an error bound $p_b < $ p, depth $D$ and constants $A_I, A_V$ |
| **output** | | A CliNR tree $T^{B=p_b,D}$ |
| 1 | | A *CliNR* tree $T^{B=p_b,D}$ Let $r = \lceil \log(pA_I n(1 - p_b) + p_b) - \log(2A_V np)) \rceil$ |
| 2 | | Let $s$ be the length of $C$ and $\bar{s}_D = \lfloor \frac{p_b}{p} \rfloor$; |
| 3 | | Let $t_D = \lceil s/\bar{s}_D \rceil$ |
| 4 | | Let $C^{\bar{s}}$ be a length $\bar{s}_D$ sub circuit of $C$ and let $p_{\log_{1b}}$ be an upper bound on the logical error in $CliNR_{1,r}(C^s)$. |
| 5 | | Let $t = \lfloor \frac{2}{9(4A_V n + B_V)p + 3A_I np]} \rfloor$ |
| 6 | | Create the tree $T$ with a single vertex $v_{0,0}$ and set $s_{0,0} = s$ |
| 7 | | Divide $C$ into $t_D$ sub-circuits $C_{D,j}$ of size at most $S_D$ and add vertices $v_{D,j}$ to $T$ with $r_{D,j} = r$ and $s_j$ corresponding to the length of $C_{D,j}$ |
| 8 | **for** | $\ell = D$ to 1 **do** |
| 9 | | $j = 0$ |
| 10 | | Create new vertex $V_{\ell-1,0}$ with $r_{\ell-1,0} = r$ and $s_{\ell-1,0} \sum_{i=0}^{t-1} s_{\ell,i}$ |
| 11 | | **for** all vertices $V_{\ell,k}$ **do** |
| 12 | | **If** $V_{\ell-1,j}$ has $< t$ children **then** |
| 13 | | └ make $V_{\ell,k}$ a child of $V_{\ell-1,j}$ |
| 14 | | **else** |
| 15 | | $j = j + 1$ |
| 16 | | Create new vertex $V_{\ell,j}$ with $r_{\ell,j} = r$ and $s_{\ell-1,j} \sum_{i=jt}^{jt+t-1} s_{\ell,i}$ make $V_{\ell,k}$ a child of $V_{\ell-1,j}$ |
| 17 | └ | └ └ |
| 18 | **return** | $T^{B=p_b,D}$ |

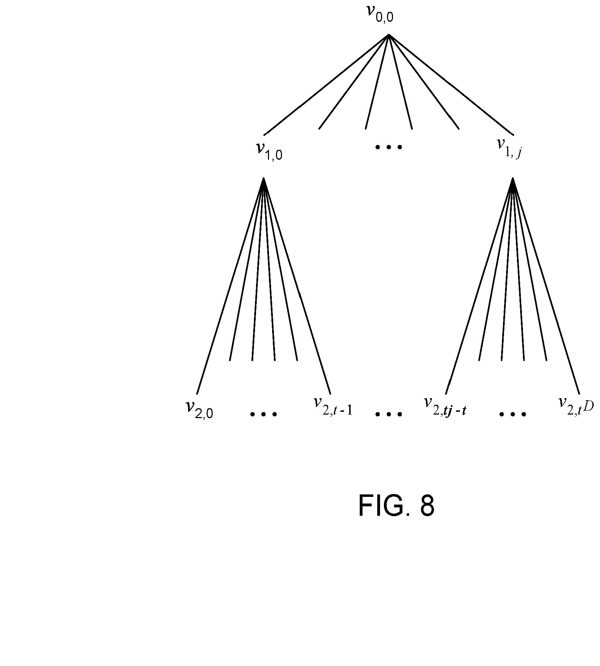

An example is given in Figure 8. This construction can keep the error bounded for a range of $0 < p_b < 1$, for the main result $p_b = 2/3$ is fixed.

The bounded tree has a simple structure that allows fixing an upper bound on the error rates and gate overheads at each layer. Moreover, this overhead is of order *np.* If the first node has a single child and $np \to 0$ the implementation will lead to a vanishing error rate. Moreover, since this can always happen with $D < O(log(sp))$ the overhead is polynomial in *sp.*

**Theorem 1** *For any Clifford circuit C of size s, if $np \to 0$ then by choosing D =*

$$\left[\frac{log(\frac{3}{2}sp)}{-log[(\frac{9}{2}(4A_Vn+B_V)p+3A_Inp])} + 1\right], CliNR(T^{B=\frac{2}{3},D}, C)$$ has a vanishing logical error rate and a gate overhead that is upper bounded by $\omega_G \le 12^D$.

*Proof.* Proof follows directly from Lemma 6 and Lemma 7 described below.

It should be noted that the condition $np \to 0$ cannot be avoided since the logical error is always bounded from below the error in RSI which has $A_In$ noisy gates.

## VI.A.1 Notations

CliNR$_{1,r}(C)$ denotes *CliNR* on a single circuit *C* using r stabilizer checks. *CliNR(T, C)* is used to denote generalized *CliNR* as in the algorithm 1. In this context *C* is used to determine the Clifford circuit of interest and s is the length (number of gates) of the circuit. The notation introduced in the algorithm 1 is used. Further, $\tilde{s}_{\ell,j}$ is used to denote the expected number of gates in *CliNR*$(T_{\ell,j}, C_{\ell,j})$ where $T_{\ell,j}$ is the subtree of *T* starting at the vertex $v_{\ell,j}$, including all its children, and setting $r = 0$ at the root. It is the expected number of gates for the circuit replacing $C_{\ell,j}$ in the algorithm 1. $\tilde{s}_\ell = \max_j(\tilde{s}_{\ell,j})$ is used.

$m_{\ell,j} = A_Pn + r_{\ell,j}(A_Vn + B_V)$ is defined and generally no subscript is used in the context of *CliNR*$_{1,r}$. Further, upper and lower bars are used to denote the max and min of a variable over all vertices in the same layer. *e.g.* $\bar{r}_\ell = \max_j(s_{\ell,j})$ and $\underline{r}_\ell = \min_j(r_{\ell,j})$. The notation $g_p(x) = 1 - (1 - p)^x$ is used.

To denote the logical error in a specific context (usually for the *CliNR* implementation), $p_{log}$ is used, e.g., $p_{log}(C)$ for the logical error in implementing a Clifford circuit *C* and $\bar{p}_{b\ell}$ as an upper bound on the logical error for *CliNR*$(T_{\ell,j}, C_{\ell,j})$.

The qubit and gate overhead are denoted by $\omega_Q$ and $\omega_G$ respectively in an implementation of CliNR.

The term *input rails* is used to denote the *n* rails not used in RSP, noting that these change after each RSI step.

## VI.A.2 Technical lemmas

**Lemma 2** *Let $C_p$ be a noisy quantum circuit that generates a stabilizer state $|\psi\rangle$ with probability 1 - p and one of the states $P_i|\psi\rangle$ otherwise, where $P_i$ are the non-trivial Pauli operators acting on the support of $|\psi\rangle$. Let $\mathcal{C}_r$ be a sequence of r randomly selected perfect stabilizer checks for $|\psi\rangle$. Then the sequence $\mathcal{C}_r C_p$ will generate $|\psi\rangle$ a state $P_i|\psi\rangle$ and not raise a flag (i.e. an unflagged error) with probility $p2^{1-r}$.*

*Proof.* Any fixed Pauli error will anti-commute with a random stabilizer with probability 1/2. This implies that r random stabilizer measurements will fail to flag an error with probability $(2^{-r})$. The stabilizer checks have no net impact on the circuit apart from flagging errors. The probability of no error is 1 - p, the probability of an error, but no flag is $p2^{-r}$ and the probability of a flag is $p(1 - 2^{-r})$.

**Lemma 3 (*CliNR$_1$* bounds)** *The implementation CliNR$_{1,r}(C)$ has a logical error rate*

$$p_{log} \le \frac{(1-(1-p)^{A_Pn}(1-p_{log}(C))2^{-r}+2g_p(A_Vn+B_V)}{(1-p)^m(1-p_{log}(C))} \qquad (18)$$

$$+g_p(A_In)$$

where $p_{log}(C)$ is the probability of a logical error in C and $m = A_Pn + r(A_Vn + B_V)$. Moreover, the gate overhead satisfies

$$\omega_G \le \frac{(m+s)}{s(1-p)^m(1-p_{log}(C))} + \frac{A_In}{s}. \qquad (19)$$

It is possible to implement CliNR$_{1,r}(C)$ using 3$n$ + 1 qubits.

*Proof.* The fact that CliNR$_{1,r}(C)$ implements C and that it can be implemented with 2$n$ + $n_a$ + 1 qubits is apparent from its structure, noting that the ancilla used to flag the errors can be re-used on all stabilizer checks.

For $\omega_G$ the probability that it is required to restart the circuit due to a flagged error needed to be bounded. This can happen if there is an error before the specific check, or if there is a measurement error during the check. In either case, it is bounded by the probability of having an error at any point up to that specific check (included). The probability of an error before the final check is at most $p_{res} \le 1 - (1 - p)^m(1 - p_{log}(C))$.

The expected number of times the repeating part of the circuit is executed is given by

$$\sum_{i \ge 1} p_{\mathrm{res}}{}^{i-1}(1 - p_{\mathrm{res}})$$

$$= \frac{1}{1 - p_{\mathrm{res}}}$$

$$\le \frac{1}{(1-p)^m (1 - p_{\log}(C))}$$

The total expected gate count is upper bounded by $\omega_G S \le \frac{(m+s)}{(1-p)^m(1-p_{\log}(C))} + A_i n$ .

The probability of an undetected logical error at each stage (RSP, RSV, RSI) is denoted as $p_P, p_V, p_I$ respectively. The probability of a logical error is upper bounded by the sum of probabilities of a logical error at any of these stages, conditioned on no detection which has probability $(1 - p_{\mathrm{res}})$.

$$p_{\log} \le \frac{p_P + p_V}{1 - p_{\mathrm{res}}} + p_I \qquad\qquad (20)$$

where the fact that RSI is always conditioned on *ND* is used.

(RSP) For $p_p$ it is noted that a logical error not being detected is either due to a stabilizer check commuting with the error or an error in $p_V$ (which is accounted for in the next term). The probability of a logical error in RSP is $1 - (1 - p)^{A_P n}(1 - p_{\log}(C))$. Lemma 2 leads to $p_P \le 1 - (1 - p)^{A_P n}(1 - p_{\log}(C))2^{-r}$.

(RSV) For the ith stabilizer check, the probability of an error is $1 - (1 - p)^{A_V n + B_V}$ and the probability that it is also not detected by a one of the latter stabilizer checks is $(1 - (1 - p)^{A_V n + B_V})2^{-r+i}$ So

$$p_v \le \sum_{i=1}^{r} (1 - (1-p)^{A_V n + B_V}2^{-r+i} \le 2g_p(A_V n + B_V)$$

(RSI) At most $A_I n$ operations are required to complete the teleportation so $p_\le g_p(A_I n)$.

**Lemma 4 (Logical error bounds for a CliNR tree)** *Let T be a CliNR tree of depth D. The implementation CliNR(T, C) is upper bounded*

$$p_{\log} \le t_1 \left( \frac{(1 - (1-p)^{A_P n}(1 - \bar{p}_{b1}))2^{-\bar{r}_1} + 2g_p(A_V n + B_V)}{(1-p)^{\bar{m}_1}(1 - \bar{p}_{b1})} \right. \qquad (21)$$

$$\left. + g_p(A_I n) \right)$$

where

$$p_{b\ell} = \bar{t}_{\ell+1}( \qquad\qquad (22)$$

$$\frac{(1 - (1-p)^{A_P}(1 - \bar{p}_{b\ell+1}))2^{-\bar{r}_{\ell+1}} + 2g_p(A_V n + B_V)}{(1-p)^{\bar{m}_{\ell+1}}(1 - \bar{p}_{b\ell+1})}$$

$$+ g_p(A_I n))$$

for $\ell \le D$ and

$$p_{bD} = (1-p)^{\bar{s}_D} \cdot \qquad\qquad (23)$$

*Proof.* Proof is done by induction starting with $D = 1$ as the base case. At $D = 1$ a sequence is $t_1 \, CliNR_{1,n}(C_{1,j})$. The upper bound (21) is a consequence of adding the errors from each $CliNR_{1,n}(C_{1,j})$ each of which is given by Lemma 3.

By the induction hypothesis (18) is a bound for $D = d$. For $D = d + 1$ a CliNR tree $T^-$ is constructed starting from $T$ and removing all verticies at layer $D - 1$. By hypothesis (21) holds for $CliNR(T^-, C)$. Since the circuit $CliNR(T, C)$ is constructed by first constructing the circuit $CliNR(T^-, C)$ and then replacing the circuits $C_{d,j}$ with a sequence of at most $t_d$

$CliNR_1$ circuits, each having a logical error bounded by $p_{b(d1)}/\bar{t}d + 1$ (from Lemma 3), (21) is recovered.

**Lemma 5 (Gate overhead for CliNR tree)** *Let T be a* **CliNR** *tree of depth D. The gate overhead for the implementation CliNR(T, C) satisfies*

$$\omega_G s \leq \bar{t}_1 \left( \frac{(\bar{m}+\tilde{s}_1)}{(1-p)^{\bar{m}}(1-p_{b1})} + A_I n \right) \tag{24}$$

where $p_{b\ell}$ is given by (22) and (23),

$$\tilde{s}_\ell \leq \bar{t}_{\ell+1} \frac{\bar{m}+\tilde{s}_{\ell+1}}{(1-p)^{\bar{m}_{\ell+1}}(1-p_{b(\ell+1)})} + A_I n \tag{25}$$

for $\ell < D$ and $\tilde{s}_D$ is the number of gates in the largest sub circuit at depth $D$.

*Proof.* Proof is done by induction starting with $D = 1$ as the base case. Since at $D =$ a sequence is $CLiNR_{1,r_{1,j}}(C_j)$ each with an upper bound on the expected gate number given by Lemma 3 (24) is obtained.

The induction hypothesis is that (24) holds for $D = d$. For $D = d + 1$ a CliNR tree $T^-$ is constructed starting from $T$ and removing all vertices at layer $D - 1$. By hypothesis (24) holds for $CliNR(T^-, C)$. Since the $CliNR(T, C)$ circuit is constructed by first construcing $CliNR(T^-, C)$ and then replacing each sub circuit $C_{d,j}$ with a sequence of at most $t_{d+1}$ $CliNR_1$ circuits, each having an estimated running time bounded *by $\tilde{s}_d/\bar{t}_{d+1}$* (from Lemma 3). Eq. (24) is recovered.

**Lemma 6 (Logical error bound for (CliNR($T^{B=2/3,D}$, C))**

Assume $A_P n + 3(4A_V n + B_V) + A_I n + [\log(pA_I n(1 - 2/3) + 2/3) - \log(2A_V np))](A_V n + B_V) < 1/(2p)$.

Let $T^{B=2/3,D}$ be a bounded CliNR tree for a Clifford circuit $C$, then the implementation $CliNR(T^{B=2/3,D}, C)$ has a logical error

$$p_{\log} \leq sp^{D+1} \left[ \frac{9(4A_V n + B_V) + 3A_I n}{2} \right]^D .$$

*Proof.* Proof is done by proving that $p_{b_\ell}$ in (22) remains bounded for all $\ell > 1$. The Bernoulli bound $(1 - p)^x \geq (1 - xp)$ gives

$$p_{b\ell} \leq \bar{t}_{\ell+1} ($$

$$\frac{(A_P np(1-\bar{p}_{b\ell+1})+\bar{p}_{b\ell+1})2^{-r}+2(A_V n + B_V)}{(1-mp)(1-\bar{p}_{b\ell+1})} \tag{26}$$

$$+A_I np)$$

where it is used the fact that $r_{\ell,j} = r$ furthermore it can be used the fact that $r = \lceil \log(pA_I n(1-2/3)+2/3) - \log(2A_V np)) \rceil$ and to show that if if $\bar{p}_{b\ell+1} \leq 2/3$ then

$$p_{b\ell} \leq \bar{t}_{\ell+1} \left[ \frac{(4A_V n + B_V)}{p(1-mp)(1-\bar{p}_{b\ell+1})} + A_I np \right]$$

by assumption $1 - mp > 1/2$, and by construction $\bar{t}_{\ell+1} = t < \dfrac{2}{9(4A_V n + B_V)p + 3A_I np}$ then if $\bar{p}_{b\ell+1} \leq 2/3$ it holds

$$p_{b\ell} \leq 2/3$$

for all $\ell > 1$ as long as $p_{bD} < 2/3$ which is ensured by setting $\bar{s}_D = \lfloor \frac{2}{3p} \rfloor$ in the algorithm.

The same can be done for (21) with the expectation that $t_1 \neq t$ therefore $p_{\log} \leq$

$$2/3 t_1/t \le sp \left( \frac{2}{9(4A_V n + B_V)p + 3A_I np} \right)^D$$

is obtained.

**Lemma 7 (Gate overhead for CliNR($T^{B=2/3,D}$, *C*)**

Under the same assumptions as Lemma 5, $\omega_G$ for *CliNR*($T^{B=3/2,D}$, *C*) satisfies

$$\omega_G s \le 12^D s$$

*Proof.* In the proof of Lemma 5 it is shown that $p_{b\ell} < 2/3$ for all $\ell > 1$. This is used in (25) as well as the bound $mp < 1/2$ and the Bernouli bound to get.

$$\tilde{s}_\ell \le t(6(m + \tilde{s}_{\ell+1}) + A_I n)$$

since $\bar{s}_D < \dfrac{2}{3p}$ is chosen. By assumption $m + A_I n < \dfrac{1}{2p}$ holds, reducing the expression to

$$\tilde{s}_\ell \le t \left( 6(\frac{1}{2p} + \tilde{s}_{\ell+1}) \right)$$

By construction $\bar{s}_\ell \ge s_D \ge \dfrac{1}{2p}$ so $\tilde{s}_\ell \le 12\tilde{s}_{\ell+1}$, giving a total expected gate count $\omega_G s \le 12t_1(12t)^{D-1}s_D = 12^D s$.

**VI.B Optimizing the tree structure**

The theoretical bounds derived in previous sections are very loose and cannot be used to find the CliNR tree that will optimize performance. Clifford simulations are a helpful tool that can be used to estimate performance, but running a search over many possible trees can still be resource intensive.

Below it is shown how to narrow down the search space, present an alternative method to estimate performance without a simulation and show how the two can be combined in order to optimize the CliNR tree parameters for a specific circuit *C* under a given error model.

**VI.B.1 Estimating performance**

In order to estimate performance without a full simulation the Markov method is adapted and a simplified error model is used.

The method works by propagating a vector $\vec{p}$ that represents the probabilities for various events: no error ($\vec{P}_0 = p_n$), undetected error ($\vec{P}_1 = p_u$), and detection at each stabilizer $j$ ($\vec{P}_{k+2} = p_{dk}$).

The error during RSP is denoted as $p_p$, then the state $\vec{P}$ after RSP has $p_n = 1 - p_p$ and $p_u = p_p$ and 0 for all other entries. The matrix $T(k)$ defined below is used to propagate $\vec{P}$ through stabilizer check $k$. $T_{00}(k) = 1 - p_{de} - p_{ue}$ where $p_{de}$ and $p_{ue}$ are the probabilities for errors during the check that will or will not be detected respectively, similarly $T_{k+2,0}(k) = p_{de}$ and $T_{10} = p_{ue}$.

The probability that a previously undetected error will be detected is 1/2 so $T_{1,1}(k) = 1/2$, $T_{k+2,1}(k) = 1/2$. Further, $T_{j,j}(k) = 1$ for all $j > 1$.

Following all checks a similar matrix W to propagate the teleportation can be used. Setting $p_l$ as the error at RSI $W_{00} = 1 - p_l$, $W_{10} = p_l$ and $W_{k,k} = 1$ for all $k > 0$.

The logical error $p_{\log}'$ following this process is calculated using $p_{\log}' = \dfrac{p_u}{p_n + p_u} = \dfrac{\vec{P}_1}{\vec{P}_0 + \vec{P}_1}$. If there are $g_P$ gates for RSP, $g_C$ gates for each check with r' checks and $g_I$ gates for for RSI then the expected total number of gates executed is given by

$$g_{tot} = g_P + r'g_C + g_I + \sum_k (g_P + kg_P)m_{res(k)} \qquad (27)$$

$$m_{res(k)} = \frac{\vec{P}_{k+2}}{p_{\text{res}}}\left(\frac{1}{1-p_{\text{res}}} - \right.$$

where $m_{res(k)}$ is the expected number of restarts at the kth check. $\left.1\right)$ and $p_{\text{res}} = \Sigma_k \vec{P}_{k+2}$.

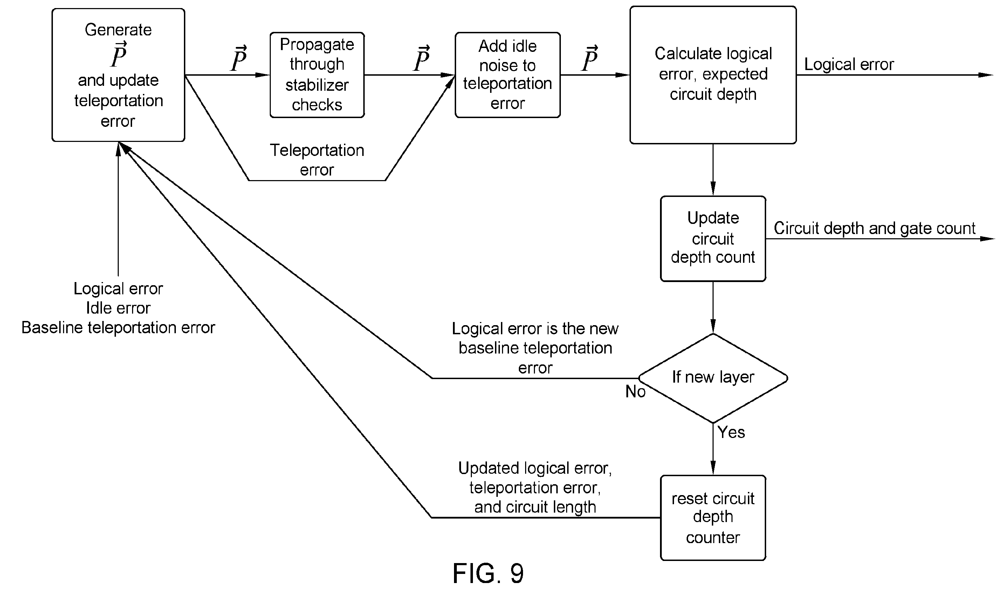

Using this for $CliNR_1$ is straightforward. For a CliNR tree $T$ the vector is propagated through the circuit, re-initializing $\vec{P}$ after each injection step, and using $p_{\log}'$ to update the injection error $p_I$ in a way that depends on the error model (see below). In particular this allows including idling errors. At one level up it is set $\vec{P}_0 = 1 - p_{\log}'$ and $\vec{P}1 = p_{\log}'$ and the same procedure is followed (see Figure 9).

### VI.B.2 Implementing different error models

The error model depends on two main factors. The implementation of each stage (in particular which gate-set is used) and the noise sources. Our aim is to provide values for $p_p$, $p_{de}$, $p_{ue}$ and $p_I$, noting that these (in particular $p_p$ and $p_I$) can change during execution. It should be also noted that the number of gates (e.g. $g_P$, $g_C$, and $g_I$) are implementation dependent and furthermore that the errors will usually depend on the specific gate-set used.

The preparation and check errors $p_p$, $p_{de}$, $p_{ue}$ can be estimated using any standard methodology (example below) and need to account only for the qubits in the resource state. The RSI error $p_I$ includes all errors in the input rails, including $p_{\log}'$ from the previous circuit, and any idling errors during execution. The idling errors are particularly sensitive to the expected length of the circuit which depends on the detection probabilities $p_{dk} = \vec{P}_{k+2}$.

### VI.B.2.1 Example

For concreteness, the following model is used (see Section VI.C for more details). First, the errors are set. 2 qubit gate errors have probability $p$, 1 qubit errors have probability $p/10$ and idle errors have probability $1/1000$ (per idle qubit) and measurement errors have probability p/10. The errors are depolarizing for qubits and bit-flip for measurements.

At layer $D$ it is assumed that a sub-circuit $C_{D,j}$ of length $s'$ has $0.5s'$ 2 qubit gates and $0.5s'$ 1 qubit gates. The total number of 1 and 2 qubit gates for RSP are $0.5s' + 2n$ 1 qubit gates and $0.5s' + n$ 2 qubit gates (note that in-practice it's possible to get an accurate count of the 1 and 2 qubit gates which would improve precision). It is also assumed that the main source of idle errors is from qubits not participating in $C_{D,j}$ and that the number of idle gates is roughly $g_{idle-p} = 3/2s'$ (since each 2-qubit gate takes 2 rails).

The expected error is $p_p = 1 - (1 - p)^{s'/2+n}(1 - p/10)^{s'/2+2n}(1 - p/1000)^{3/2s'}$.

At layers above layer $D$ it holds $p_p = 1 - (1 - p_{\log}')(1 - p)^n(1 - p/10)^{2n}$

For RSV it is assumed that each stabilizer check requires $6n/4$ 2 qubit gates (A random controlled $2n$ qubit Pauli implemented using a sequence of controlled $X$, $Y$ or $Z$), 2 one qubit gates and a measurement. There are 15 different 2 qubit errors but one has not impact ($X$ error on an $X$ eigenstate), 8 are detectable and 6 are undetectable. So $p_{de} = 1 - (1 - 8p/15)^{2n/3}(1 - 2p/30)^2(1 - p/10)$ and $p_{ue} = 1 - (1 - 6p/15)^{2n/3}$. For simplicity the idle errors and 1 qubit errors are not included in this expression. These can be added using the same methodology.

For RSI there are a total of $n$ 2 qubit gates and $4n$ 1 qubit gates or measurements. It is assumed that idling noise is minimized by timing the first operation in every branch correctly. When multiple $CliNR_1$ circuits feed into the same parent (i.e the corresponding $v_{\ell,j}$ have the same parent $v_{\ell-1,j'}$) then the first of these operations will have $p_I = 1 - (1 - p)^n(1 - p/10)^{4n}$. Subsequent rounds must also account for idle errors. The same reasoning can be used to derive (27). At layer $D$ the idle gate number was already calculated from RSP to be $g_{idle-p} = 4/3s$ at each stabilizer there are $(6n/4)(3n - 2) = 4.5n^2 - 3n$ idle gates so the expected total number of idle gates is

$$g_{idle-pv} = 4/3s + r'(4.5n^2 - 3n) \qquad (28)$$

$$+ \sum_k (4/3s + k(4.5n^2 - 3n))m_{res(k)}$$

and $p_I \approx 11 - (1 - p)^n(1 - p/10)^{4n}(1 - p/100)^{g_{idle-pv}}$. Note that this is an approximation that requires $g_{idle-pv}p/100 \ll 1$.

At layers above $D$ the $4/3s$ is replaced by the sum of idle gates on all children.

### VI.B.3 Optimizing the tree

Given that the procedure for estimating performance is fast, it is possible to iterate over a very large number of different trees in order to find optimal solutions. There are multiple ways of doing this including an exhaustive search and Monte Carlo sampling (over different tree parameters). Regardless of the method used, it is important to identify the smallest possible sub-circuit where *CliNR* is useful, this is a function of the error model and number of qubits. It can be done by searching over sub circuits $C_s$ of different length $s$ and finding the minimal length $s' = \min(s|CliN R_{1,r=1}(C_s) < p_{log}(C_s))$. This can then be iterated over $r$ to find the lowest value $p_{log} = \inf_r(p_{log}(CliNR_{1,r}(C_{s'})))$. Note that in practice it might not be able to predict the *infimum,* in which case a cutoff on $r$ or on the expected gate overhead can be placed. Now a lower bound on the attainable logical error and a lower bound on the minimal size of the sub circuits to be used are obtained.

In principle, the bounded error tree $T^{B=2p_{log},D}$ with $D$ sufficiently large so that the $t_1 = 1$ will have a logical error of at most $2p_{log}$. While this is likely to be close to optimal in terms of the logical error rate (at worst there is a factor of 2), it may take too long to run, and/or have a significancy longer running time than a different tree that leads to nearly the same logical error.

All of the above procedures assume that $p_{log}(C_i)$ depends only on the gate counts. They can however be modified easily to accommodate more general error models.

## VI.C Numerical results

To show the advantage of recursive *CliNR* in experimentally relevant regimes both the estimation method above and a direct simulation are used. The error model introduced in section VI.B.2 is used with $p = 10^{-3}$ and $p = 10^{-4}$, noting that this should be achivable in the not too distant future. One and two qubit errors below 0.001% and 0.05% respectively have been demonstrated. Ion qubit coherence times of $T_2^* > 1000$ seconds have been demonstrated and fast two gates for trapped ions can be on the order of a microsecond. The idle noise can therefore be reduced to far lower values than $10^{-7}$. It is important to note that the impact of idle noise becomes more significant as the tree becomes deeper.

Since the advantages of recursive *CliNR* are expected to be most pronounced for large circuits, the focus is on the family of circuits that has the largest expected gate-count, *i.e.* random Clifford circuits, making slight adjustments so that the gate count is fixed at $n^2$.

## VI.C.1 Estimated performance

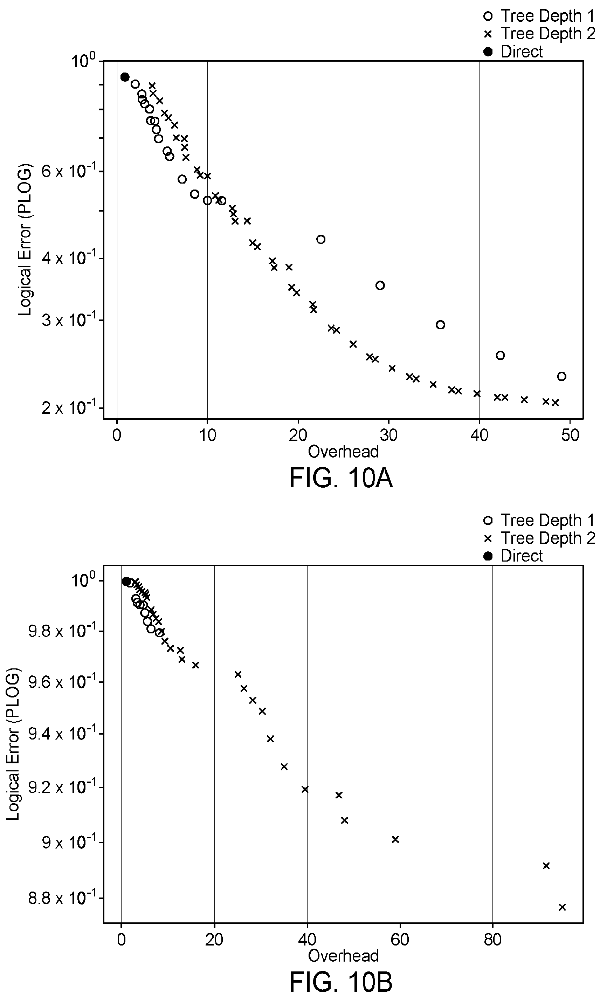

Using the Markov method (Section VI.B.1) values of $n$ and $p$ were searched where recursive *CliNR* at depth 2 will outperform the standard scheme (*i.e.* recursive *CliNR* at depth 1). Results presented here are for 70 qubits at $p = 10^{-3}$ and 400 qubits at $p = 10^{-4}$. At depth 1 trees with different numbers of verticies (ranging from 1 to 10) and the same number of checks at each vertex (ranging from 0 to 30) are considered. At depth 2, it has been shown the same depth 1 constrains with each depth 1 vertex having the same number of children (ranging from 2 to 10) and each having the same number of checks (ranging from 0 to 20). Plotted results (Figures 10A and 10B) show the Pareto frontier at each depth, *i.e.* only points that are optimal in terms of either the overhead or the logical error. The overhead was capped at 50 and 100 respectively. Figures 10A and 10B depict analytical estimates of the performance at (Figure 10A) $n = 70$, $p = 10^{-3}$ (overhead capped $\omega_G < 50$ ) and (Figure 10B) $n = 400$, $p = 10^{-4}$ (overhead capped at $\omega_G < 100$. Plotted points are the Pareto frontiers at the respective depths.

## VI.C.2 Numerical simulations

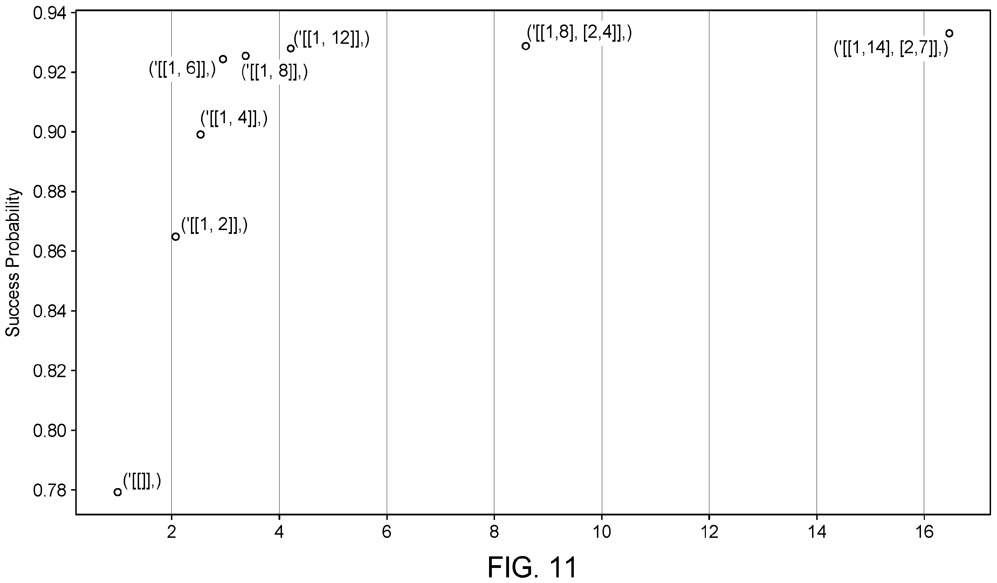

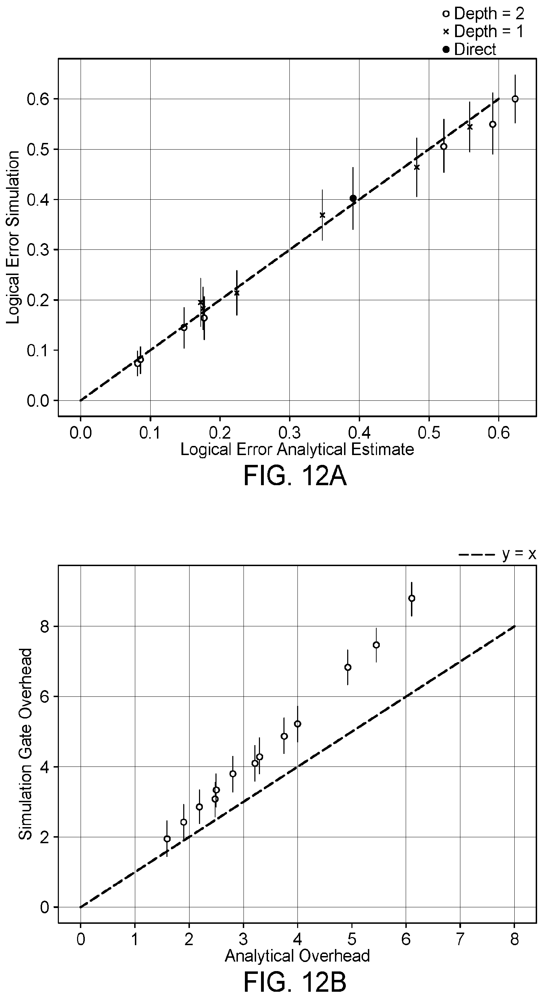

The numerical simulations were done and included a complete run of the circuit including all restart events. Using a combination of analytical and simulated data points, an advantage for recursive *CliNR* at $p = 10^{-4}$ and a qubit count lower than 100 were not identified. Consequently, the focus is on $p = 10^{-3}$ to keep the simulation time manageable. Results are plotted in Figures 11. Figures 12A and 12B depict the highest success probability (lowest logical error rate) at fixed overhead for *CliNR* with trees of depth 1 and 2, using up to 3 vertices at the lowest depth more data being collected. Labels indicate the tree type. Even with this relatively shallow circuit ($s < 2/p$) an improvement in the logical error can be seen in going to higher depth.

## VI.D Analysis of the numerical estimates

The optimization procedure described above relies on the performance of the analytical estimates. This method is compared against a numerical simulation in two regimes: 1. The regime used in Section VI.A.3 where 1 and 2 qubit gates have an error rate $p_1 = p_2 = p$ and there are no idle errors, and 2. The regime III.D.2.1 where $p_2 = 10p_1 = 100p_{idle}$.

**VI.E Optimization procedure**

A second optimization procedure builds on this idea but uses a top-down approach that allows bounding the gate overhead, *e.g.* as in Algorithm 3, in Table III.

Table III: Algorithm 3: Algorithm for optimizing a CliNR tree with a bounded gate overhead

**input**      Clifford Circuit $C$, Error model, maximal overhead $\overline{\omega_G}$, error threshold $p_{\log_{th}}$

**output**     CliNR tree $T$, estimated gate overhead $\omega_G$, estimated logical error $p_{\log}$

1   Using the error model to estimate $CliNR_{1,1}(C_s)$ find $s'$ that minimizes $p_{\log}\big(CliNR_{1,1}(C_s)\big)$.

2   Set $m_{subC} = \lceil s/s' \rceil$

3   Let $T_D$ be the set of depth $D$ CliNR trees with the same parameters at each layer, *i.e.* $t_{\ell,j} = t_\ell, r_{\ell,j} = r_\ell \le r_{th}, s_{\ell,j} = s_\ell$, each parent has at least 2 children, and the number of vertices at layer $D$ is at most $m_{subC}$

4   set $D = 1$ , $\underline{p_{\log}} = p_{\log}(C)$

5  **repeat**

6        $nextlayer = False$

7        **for**  all $T'$ in $T_D$

8           Let $p_{\log}'$ and $\omega_G'$ be the logical error and gate overhead estimates for $CliNR(T', C)$

9           **if**     $p_{\log}' < \underline{p_{\log}}$ and $\omega_G' < \overline{\omega_G}$

10             $T = T'$ , $\underline{p_{\log}} = p_{\log}'$, $\omega_G = \omega_G'$

11             $nextlayer = True$

12        **if**  $\underline{p_{\log}} \le p_{\log_{th}}$

13           $nextlayer = False$

14      $D = D + 1$

15  **until**  $nextlayer = False$

16  **return**  $T$, $\omega_G$, $p_{\log}$

The embodiments described herein provide the Clifford noise reduction scheme CliNR that is a partial error correction which produces a reduction of the logical error rate of Clifford circuits at the cost of a moderate overhead in term of qubit count and gate count. With circuit level noise with rate *p*, *CliNR* achieves a vanishing logical error rate for the implementation of *n* -qubit Clifford circuits with size *s if* $snp^2$ goes to 0. The embodiments described herein provides a recursive version of *CliNR* capable of reaching larger circuits. The condition $snp^2 \to 0$ is generalized to $np \to 0$ with a gate overhead upper bounded by $O(\log(sp))$. The embodiments described herein further provide a method for estimating performance without a full simulation and a method for optimizing the parameters of the generalized *CliNR* implementation, in particular minimizing the expected logical error rate for a fixed bound on the gate overhead.

While the foregoing is directed to specific embodiments, other and further embodiments may be devised without departing from the basic scope thereof, and the scope thereof is determined by the claims that follow.

When used in this specification and claims, the terms "comprises" and "comprising" and variations thereof mean that the specified features, steps or integers are included. The terms are not to be interpreted to exclude the presence of other features, steps or components.

# EP 4 672 095 A1

## REPRESENTATIVE FEATURES

Representative features are set out in the following clauses, which stand alone or may be combined, in any combination, with one or more features disclosed in the text and/or drawings of the specification.

1. A method of implementing an n-qubit Clifford unitary on a quantum processor comprising a first block of n qubits, a second block of n qubits, a third block of n qubits, and an ancilla qubit, the method comprising:

preparing, by a system controller, n Bell states each on a pair of a qubit in the second block and a qubit in the third block;

applying, by the system controller, an n-qubit Clifford circuit that corresponds to the n-qubit Clifford unitary, to the third block;

measuring, by the system controller, one or more stabilizers supported on the second block and the third block;

applying, by the system controller, controlled-NOT gates each on a pair of a qubit in the first block and a qubit in the second block;

applying, by the system controller, a Hadamard gate on each qubit in the first block;

measuring, by the system controller, the first block and the second block; and

applying, by the system controller, an n-qubit Pauli operator to the third block based on the measurement of the first block and the second block.

2. The method of clause 1, further comprising:
returning to the preparing of n Bell states, if a fault is detected by the measuring of the one or more stabilizers.

3. The method of clause 1, wherein the n-qubit Pauli operator comprises a sequence of controlled-Pauli operations.

4. The method of clause 1, wherein the one or more stabilizers are measured using an ancilla qubit and a sequence of controlled-Pauli operations.

5. The method of clause 1, further comprising:

decomposing, by a classical computer, the n-qubit Clifford circuit into sub-circuits; and

implementing each of the sub-circuits by gate teleportation.

6. The method of clause 1, wherein each qubit comprises a physical qubit.

7. The method of clause 1, wherein each qubit comprises a logical qubit.

8. A method of implementing a controlled-Pauli CZ gate on a quantum processor comprising a first block of n qubits, a second block of n qubits, and an ancilla, the method comprising:

preparing, by a system controller, each qubit in the second block in a superposition state $1+\rangle=|0\rangle+|1\rangle$;

applying, by the system controller, a CZ circuit that corresponds to the controlled-Pauli CZ gate, to the second block;

measuring, by the system controller, one or more stabilizers supported on the second block;

applying, by the system controller, controlled-NOT gates each on a pair of a qubit in the first block and a qubit in the second block;

applying, by the system controller, a Hadamard gate on each qubit in the first block;

24

measuring, by the system controller, the first block; and

applying, by the system controller, a Pauli operator to the second block based on the measurement of the first block.

9. The method of clause 8, further comprising:
returning to the preparing of each qubit in the second block in a superposition state $|+\rangle=|0\rangle+|1\rangle$, if a fault is detected by the measuring of the one or more stabilizers.

10. The method of clause 8, wherein the Pauli operator comprises a sequence of controlled-Pauli operations.

11. The method of clause 8, wherein the one or more stabilizers are measured using an ancilla qubit and a sequence of Pauli operations.

12. The method of clause 8, wherein each qubit comprises a physical qubit.

13. The method of clause 8, wherein each qubit comprises a logical qubit.

14. A method of implementing an n-qubit Clifford circuit on a quantum processor comprising a first block of n qubits, a second block of n qubits, a third block of n qubits, a fourth block of n qubits, a fifth block of n qubits, and ancilla qubits, the method comprising:

decomposing, by a classical computer, the n-qubit Clifford circuit into n-qubit sub-circuits;

preparing, by a system controller, n Bell states each on a pair of a qubit in the second block and a qubit in the third block;

applying, by the system controller, one of the n-qubit sub-circuits to the third block;

measuring, by the system controller, one or more stabilizers supported on the second block and the third block;

applying, by the system controller, controlled-NOT gates each on a pair of a qubit in the first block and a qubit in the second block;

applying, by the system controller, a Hadamard gate on each qubit in the first block;

measuring, by the system controller, the first block and the second block;

applying, by the system controller, an n-qubit Pauli operator to the third block based on the measurement of the first block and the second block;

preparing, by the system controller, n Bell states each on a pair of a qubit in the fourth block and a qubit in the fifth block;

applying, by the system controller, another one of the n-qubit sub-circuits to the fifth block;

measuring, by the system controller, one or more stabilizers supported on the fourth block and the fifth block;

applying, by the system controller, controlled-NOT gates each on a pair of a qubit in the third block and a qubit in the fourth block;

applying, by the system controller, a Hadamard gate on each qubit in the third block;

measuring, by the system controller, the third block and the fourth block; and

applying, by the system controller, the n-qubit Pauli operator to the fifth block based on the measurement of the third block and the fourth block.

15. The method of clause 14, further comprising:
returning to the preparing of n Bell states each on a pair of a qubit in the second block and a qubit in the third block, if a fault is detected by the measuring of the one or more stabilizers supported on the second block and the third block.

16. The method of clause 14, further comprising:
returning to the preparing of n Bell states each on a pair of a qubit in the fourth block and a qubit in the fifth block, if a fault is detected by the measuring of the one or more stabilizers supported on the fourth block and the fifth block.

17. The method of clause 14, wherein the n-qubit Pauli operator comprises a sequence of controlled-Pauli operations.

18. The method of clause 14, wherein the one or more stabilizers are measured using an ancilla qubit and a sequence of controlled-Pauli operations.

19. The method of clause 14, wherein each qubit comprises a physical qubit.

20. The method of clause 14, wherein each qubit comprises a logical qubit.

**Claims**

1. A method of implementing an *n*-qubit Clifford unitary on a quantum processor comprising a first block of *n* qubits, a second block of *n* qubits, a third block of *n* qubits, and an ancilla qubit, the method comprising:

    preparing, by a system controller, n Bell states each on a pair of a qubit in the second block and a qubit in the third block;
    applying, by the system controller, an n-qubit Clifford circuit that corresponds to the n-qubit Clifford unitary, to the third block;
    measuring, by the system controller, one or more stabilizers supported on the second block and the third block;
    applying, by the system controller, controlled-NOT gates each on a pair of a qubit in the first block and a qubit in the second block;
    applying, by the system controller, a Hadamard gate on each qubit in the first block;
    measuring, by the system controller, the first block and the second block; and
    applying, by the system controller, an *n*-qubit Pauli operator to the third block based on the measurement of the first block and the second block.

2. The method of claim 1, further comprising:
returning to the preparing of *n* Bell states, if a fault is detected by the measuring of the one or more stabilizers.

3. The method of claim 1 or 2, wherein the n-qubit Pauli operator comprises a sequence of controlled-Pauli operations and/or wherein the one or more stabilizers are measured using an ancilla qubit and a sequence of controlled-Pauli operations.

4. The method of claim 1, 2 or 3, further comprising:

    decomposing, by a classical computer, the *n*-qubit Clifford circuit into sub-circuits; and
    implementing each of the sub-circuits by gate teleportation.

5. The method of any preceding claim, wherein each qubit comprises a physical qubit or, wherein each qubit comprises a logical qubit.

6. A method of implementing a controlled-Pauli CZ gate on a quantum processor comprising a first block of *n* qubits, a second block of *n* qubits, and an ancilla, the method comprising:

    preparing, by a system controller, each qubit in the second block in a superposition state $|+\rangle = |0\rangle + |1\rangle$;
    applying, by the system controller, a CZ circuit that corresponds to the controlled-Pauli CZ gate, to the second block;
    measuring, by the system controller, one or more stabilizers supported on the second block;
    applying, by the system controller, controlled-NOT gates each on a pair of a qubit in the first block and a qubit in the second block;
applying, by the system controller, a Hadamard gate on each qubit in the first block;
measuring, by the system controller, the first block; and
applying, by the system controller, a Pauli operator to the second block based on the measurement of the first block.

7. The method of claim 6, further comprising:
returning to the preparing of each qubit in the second block in a superposition state $|+\rangle = |0\rangle + |1\rangle$, if a fault is detected by the measuring of the one or more stabilizers.

8. The method of claim 6 or 7, wherein the Pauli operator comprises a sequence of controlled-Pauli operations and/or wherein the one or more stabilizers are measured using an ancilla qubit and a sequence of Pauli operations.

9. The method of claim 6, 7 or 8, wherein each qubit comprises a physical qubit or wherein each qubit comprises a logical qubit.

10. A method of implementing an $n$-qubit Clifford circuit on a quantum processor comprising a first block of $n$ qubits, a second block of $n$ qubits, a third block of $n$ qubits, a fourth block of $n$ qubits, a fifth block of $n$ qubits, and ancilla qubits, the method comprising:

decomposing, by a classical computer, the $n$-qubit Clifford circuit into $n$-qubit sub-circuits;
preparing, by a system controller, $n$ Bell states each on a pair of a qubit in the second block and a qubit in the third block;
applying, by the system controller, one of the $n$-qubit sub-circuits to the third block;
measuring, by the system controller, one or more stabilizers supported on the second block and the third block;
applying, by the system controller, controlled-NOT gates each on a pair of a qubit in the first block and a qubit in the second block;
applying, by the system controller, a Hadamard gate on each qubit in the first block;
measuring, by the system controller, the first block and the second block;
applying, by the system controller, an $n$-qubit Pauli operator to the third block based on the measurement of the first block and the second block;
preparing, by the system controller, $n$ Bell states each on a pair of a qubit in the fourth block and a qubit in the fifth block;
applying, by the system controller, another one of the $n$-qubit sub-circuits to the fifth block;
measuring, by the system controller, one or more stabilizers supported on the fourth block and the fifth block;
applying, by the system controller, controlled-NOT gates each on a pair of a qubit in the third block and a qubit in the fourth block;
applying, by the system controller, a Hadamard gate on each qubit in the third block;
measuring, by the system controller, the third block and the fourth block; and
applying, by the system controller, the n-qubit Pauli operator to the fifth block based on the measurement of the third block and the fourth block.

11. The method of claim 10, further comprising:
returning to the preparing of n Bell states each on a pair of a qubit in the second block and a qubit in the third block, if a fault is detected by the measuring of the one or more stabilizers supported on the second block and the third block.

12. The method of claim 10 or 11, further comprising:
returning to the preparing of $n$ Bell states each on a pair of a qubit in the fourth block and a qubit in the fifth block, if a fault is detected by the measuring of the one or more stabilizers supported on the fourth block and the fifth block.

13. The method of claim 10, 11 or 12, wherein the n-qubit Pauli operator comprises a sequence of controlled-Pauli operations.

14. The method of any one of claims 10 to 13, wherein the one or more stabilizers are measured using an ancilla qubit and a sequence of controlled-Pauli operations.

15. The method of any one of claims 10 to 14, wherein each qubit comprises a physical qubit or wherein each qubit comprises a logical qubit.

FIG. 1

FIG. 2A

FIG. 2B

FIG. 3

FIG. 4A

FIG. 4B

FIG. 5A

FIG. 5B

FIG. 6

FIG. 7A

FIG. 7B

FIG. 7C

FIG. 8

FIG. 9

FIG. 10A

FIG. 10B

FIG. 11

EP 4 672 095 A1

FIG. 12A

FIG. 12B

Europäisches
Patentamt

European
Patent Office

Office européen
des brevets

# EUROPEAN SEARCH REPORT

**Application Number**

EP 25 18 5384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANIEL GOTTESMAN ET AL: "Quantum Teleportation is a Universal Computational Primitive", ARXIV.ORG, CORNELL UNIVERSITY LIBRARY, 201 OLIN LIBRARY CORNELL UNIVERSITY ITHACA, NY 14853, 2 August 1999 (1999-08-02), XP080665332, DOI: 10.1038/46503 * the whole document * | 1-15 | INV. G06N10/20 G06N5/01 G06N10/70 ADD. G06N10/40 |
| A | Van Den Berg Ewout ET AL: "Single-shot error mitigation by coherent Pauli checks", arXiv (Cornell University), 7 December 2022 (2022-12-07), XP093144297, Ithaca DOI: 10.48550/arxiv.2212.03937 Retrieved from the Internet: URL:https://arxiv.org/pdf/2212.03937.pdf [retrieved on 2024-03-21] * the whole document * | 1-15 | |
| A | US 2023/195563 A1 (ZHENG YICONG [CN] ET AL) 22 June 2023 (2023-06-22) * abstract * * figure 3 * * paragraph [0069] - paragraph [0089] * | 1-5, 10-15 | **TECHNICAL FIELDS SEARCHED (IPC)** G06N |

-/--

The present search report has been drawn up for all claims

| Place of search | Date of completion of the search | Examiner |
|---|---|---|
| The Hague | 23 October 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 18 5384

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RYAN-ANDERSON C ET AL: "High-fidelity and Fault-tolerant Teleportation of a Logical Qubit using Transversal Gates and Lattice Surgery on a Trapped-ion Quantum Computer", ARXIV.ORG, CORNELL UNIVERSITY LIBRARY, 201 OLIN LIBRARY CORNELL UNIVERSITY ITHACA, NY 14853, 25 April 2024 (2024-04-25), XP091738202, * abstract * * section I * | 1-5, 10-15 | |
| A | LUKAS POSTLER ET AL: "Demonstration of fault-tolerant universal quantum gate operations", ARXIV.ORG, CORNELL UNIVERSITY LIBRARY, 201 OLIN LIBRARY CORNELL UNIVERSITY ITHACA, NY 14853, 17 December 2021 (2021-12-17), XP091111853, * abstract * * sections I, III * | 1-5, 10-15 | |
| | | | TECHNICAL FIELDS SEARCHED (IPC) |
| A | YI-CONG ZHENG ET AL: "Constant depth fault-tolerant Clifford circuits for multi-qubit large block codes", ARXIV.ORG, CORNELL UNIVERSITY LIBRARY, 201 OLIN LIBRARY CORNELL UNIVERSITY ITHACA, NY 14853, 1 August 2020 (2020-08-01), XP081732303, DOI: 10.1088/2058-9565/ABA34D * abstract * * sections III, IV.A; page s * | 1-5, 10-15 | |

The present search report has been drawn up for all claims

| Place of search | Date of completion of the search | Examiner |
|---|---|---|
| The Hague | 23 October 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 5384

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2025

| Patent document cited in search report | Publication date | Patent family member(s) | Publication date |
|---|---|---|---|
| US 2023195563 A1 | 22-06-2023 | CN 112632881 A | 09-04-2021 |
| | | EP 3883176 A1 | 22-09-2021 |
| | | JP 7061726 B2 | 28-04-2022 |
| | | JP 2022520293 A | 30-03-2022 |
| | | KR 20210093840 A | 28-07-2021 |
| | | US 2021224150 A1 | 22-07-2021 |
| | | US 2023195563 A1 | 22-06-2023 |
| | | WO 2021143265 A1 | 22-07-2021 |

## REFERENCES CITED IN THE DESCRIPTION

**Patent documents cited in the description**

- US 63664604

- US 63810602